(19) 

**Europäisches Patentamt**
**European Patent Office**
**Office européen des brevets**

(11) **EP 4 583 475 A1**

(12) **EUROPEAN PATENT APPLICATION**
published in accordance with Art. 153(4) EPC

(43) Date of publication:
**09.07.2025 Bulletin 2025/28**

(21) Application number: **23860894.7**

(22) Date of filing: **30.08.2023**

(51) International Patent Classification (IPC):
**H04L 27/26** (2006.01)  **H04W 72/04** (2023.01)

(52) Cooperative Patent Classification (CPC):
**H04L 27/26; H04W 72/04**

(86) International application number:
**PCT/KR2023/012931**

(87) International publication number:
**WO 2024/049218 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.08.2022 KR 20220108892**
**19.09.2022 KR 20220118086**

(71) Applicant: **SOLiD LABS, Inc.**
**Seongnam-si, Gyeonggi-do (KR)**

(72) Inventor: **HONG, Hoony**
**Seongnam-si, Gyeonggi-do, 13493 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **METHOD AND APPARATUS FOR CONFIGURING TIMING PARAMETERS IN COMMUNICATION SYSTEM**

(57)    According to one embodiment of the present disclosure, a method performed by a controller in a communication system may include: receiving SCS capability information from each of a plurality of O-RUs; receiving slotId setting capability information from each of the plurality of O-RUs; generating slotId setting information based on the received SCS capability information and slotId setting capability information; and transmitting the generated slotId setting information to an O-DU and the plurality of O-RUs.

**FIG. 11**

RECEIVE SUPPORTED SCS CAPABILITY INFORMATION FROM O-RU — S1101

RECEIVE SlotId SETTING CAPABILITY INFORMATION FROM O-RU — S1102

GENERATE SlotId SETTING INFORMATION BASED ON RECEIVED CAPABILITY INFORMATION — S1103

TRANSMIT GENERATED SlotId SETTING INFORMATION TO O-DU AND O-RU — S1104

EP 4 583 475 A1

Description

## TECHNICAL FIELD

The present disclosure relates to a method and apparatus for determining timing parameters used in the configuration of control/user planes when establishing cells in a communication system.

## BACKGROUND ART

As wireless communication systems evolve and advance into 4th generation (4G) communication systems, 5th generation (5G) communication systems, etc., various functions and specifications are required. To satisfy these functions and specifications, various approaches have been introduced, one of which is implementing a functional split of the network infrastructure. A representative configuration of the functional split approach can be represented by dividing the base station according to function into a Centralized Unit (CU), Distributed Unit (DU), and Radio Unit (RU), with the interfaces between each of these units being defined by organizations such as 3GPP and O-RAN Alliance.

## DETAILED DESCRIPTION OF THE INVENTION

## TECHNICAL PROBLEM

One problem that the present disclosure aims to solve is to provide a method for efficiently utilizing or increasing processing capacity in fronthaul communications when configuring multiple cells or one or more shared cells.
Another problem that the present disclosure aims to solve is to provide a method for reducing resource waste and increasing communication quality when performing communications in O-RAN when configuring shared cells.

## TECHNICAL SOLUTION

According to one embodiment of the present disclosure, a method performed by a controller in a communication system may include: receiving sub-carrier spacing (SCS) capability information from each of a plurality of O-RUs included in multiple cells or one or more shared cells; receiving slot identifier (slotId) setting capability information from each of the plurality of O-RUs; generating slotId setting information based on the received SCS capability information and slotId setting capability information; and transmitting the generated slotId setting information to an O-DU and the plurality of O-RUs.
According to one embodiment, the SCS capability information may include information indicating which SCS each of the plurality of O-RUs supports, and the slotId setting capability information may include information indicating whether each of the plurality of O-RUs can change the slotId.
According to one embodiment, the step of generating slotId setting information based on the received SCS capability information and slotId setting capability information may include: identifying whether the slotId setting capability information of at least one O-RU among the plurality of O-RUs includes information indicating that the slotId can be changed; and if the slotId setting capability information of the at least one O-RU includes information indicating that the slotId can be changed, generating the slotId setting information based on the SCS capability information of O-RUs whose slotId setting capability information includes information indicating that the slotId cannot be changed, in order to configure a shared cell or to improve the processing capability of the DU.
According to one embodiment, the step of generating slotId setting information based on the received SCS capability information and slotId setting capability information may include: identifying whether the slotId setting capability information of at least one O-RU among the plurality of O-RUs includes information indicating that the slotId can be changed; and generating slotId setting information for the at least one O-RU based on the communication quality of the controller.
According to another embodiment of the present disclosure, a controller in a communication system may include: a transceiver; a memory; and at least one processor electrically connected to the transceiver and the memory, wherein the at least one processor is configured to: receive sub-carrier spacing (SCS) capability information from each of a plurality of O-RUs included in one or more shared cells or multiple cells, receive slot identifier (slotId) setting capability information from each of the plurality of O-RUs, generate slotId setting information based on the received SCS capability information and slotId setting capability information, and transmit the generated slotId setting information to an O-DU and the plurality of O-RUs.

## ADVANTAGEOUS EFFECTS OF THE INVENTION

According to the embodiments of the present disclosure, the efficiency of shared cell configuration can be improved or the processing capacity at the DU can be enhanced by unifying the slotId settings of O-RUs included in shared cells or multiple cells.

The effects according to the technical concepts of the present disclosure are not limited to the effects mentioned above, and other effects not mentioned will be clearly understood by those skilled in the art from the following description.

## BRIEF DESCRIPTION OF THE DRAWINGS

FIG. 1a illustrates a wireless communication system according to various embodiments of the present disclosure.

FIG. 1b illustrates an example of a fronthaul structure according to the functional split of a base station in accordance with various embodiments of the present disclosure.

FIG. 2 is a diagram representing an O-RAN network system according to one embodiment of the present disclosure.

FIG. 3 is a diagram representing the structure of a wireless communication system in O-RAN according to one embodiment of the present disclosure.

FIG. 4 is a diagram representing the structure of an Ethernet message according to one embodiment of the present disclosure.

FIGS. 5a and 5b are diagrams illustrating examples of C-plane messages according to one embodiment of the present disclosure.

FIG. 6 is a diagram representing the structure of an O-RAN base station including a middle node according to one embodiment of the present disclosure.

FIG. 7 is a table representing a slot ID index according to one embodiment of the present disclosure.

FIG. 8 is a diagram representing a method for configuring slot identifier (slotId) settings according to one embodiment of the present disclosure.

FIG. 9a is a diagram representing a method for performing fronthaul communication according to one embodiment of the present disclosure.

FIG. 9b is a diagram representing a method for performing communication through slotId settings according to another embodiment of the present disclosure.

FIG. 10a is a diagram representing a first embodiment of applying slotId settings according to one embodiment of the present disclosure.

FIG. 10b is a diagram representing a second embodiment of applying slotId settings according to one embodiment of the present disclosure.

FIG. 10c is a diagram representing a third embodiment of applying slotId settings according to one embodiment of the present disclosure.

FIG. 10d is a diagram representing a fourth embodiment of applying slotId settings according to one embodiment of the present disclosure.

FIG. 11 is a flowchart representing a method for setting slotId according to one embodiment of the present disclosure.

FIG. 12 is a diagram representing a method for performing communication through slotId settings with O-RUs configuring multiple cells according to one embodiment of the present disclosure.

FIG. 13 is a diagram representing the configuration of a controller according to one embodiment of the present disclosure.

FIG. 14 is a diagram representing the configuration of a middle node according to one embodiment of the present disclosure.

FIG. 15 is a diagram representing the configuration of an O-DU according to one embodiment of the present disclosure.

FIG. 16 is a diagram representing the configuration of an O-RU according to one embodiment of the present disclosure.

## MODE OF THE INVENTION

Hereinafter, the embodiments of the present disclosure are described in detail with reference to the accompanying drawings.

In describing the embodiments of the present disclosure, detailed descriptions of related functions or configurations that may unnecessarily obscure the essence of the present disclosure will be omitted. The terms used hereinafter are defined considering the functions in the present disclosure and may vary according to user's intention or practice.

Therefore, the definitions should be made based on the contents throughout this specification.

For the same reason, some components in the accompanying drawings may be exaggerated, omitted, or schematically illustrated. Also, the size of each component does not entirely reflect its actual size. The same or corresponding components in each drawing are denoted by the same reference numerals.

The advantages and features of the present disclosure, and ways to achieve them will become apparent with reference to embodiments described below in detail with reference to the accompanying drawings. However, the present disclosure is not limited to the embodiments disclosed hereinafter but may be implemented in various different forms. The embodiments are provided only for making the disclosure complete and for fully conveying the scope of the disclosure to those skilled in the art, and the present disclosure is defined only by the scope of the claims.

At this time, it should be understood that the blocks in the flowcharts and combinations of the flowchart diagrams can be performed by computer program instructions. These computer program instructions can be mounted on a general-purpose computer, a special-purpose computer, or other programmable data processing equipment's processor, so that the instructions executed through the processor of the computer or other programmable data processing equipment create means to perform the functions described in the flowchart block(s). These computer program instructions can also be stored in a computer-usable or computer-readable memory that can direct a computer or other programmable data processing equipment to function in a particular manner, such that the instructions stored in the computer-usable or computer-readable memory produce a manufacturing product that includes instruction means that implement the function described in the flowchart block(s). The computer program instructions can also be loaded onto a computer or other programmable data processing equipment, such that a series of operational steps are performed on the computer or other programmable data processing equipment to create a computer-executed process, such that the instructions executed on the computer or other programmable data processing equipment provide steps for executing the functions described in the flowchart block(s).

Also, each block may represent a module, segment, or portion of code that includes one or more executable instructions to implement the specified logical function(s). It should also be noted that in some alternative implementations, the functions mentioned in the blocks may occur out of order. For example, two consecutively shown blocks may in fact be executed substantially simultaneously, or the blocks may sometimes be executed in reverse order depending on the corresponding function.

The term 'unit or part' used in this disclosure means a software or hardware component such as Field-Programmable Gate Array (FPGA) or Application Specific Integrated Circuit (ASIC), and the 'unit' performs certain roles. However, the 'unit' is not limited to software or hardware. The 'unit' can be configured to be in an addressable storage medium, or to drive one or more processors. Therefore, as an example, the 'unit' includes components such as software components, object-oriented software components, class components and task components, processes, functions, attributes, procedures, subroutines, segments of program code, drivers, firmware, microcode, circuits, data, databases, data structures, tables, arrays, and variables. Functions provided in the components and 'units' can be combined into fewer components and 'units', or can be separated into additional components and 'units'. Moreover, the components and 'units' can be implemented to drive one or more CPUs in a device or security multimedia card. Also, in embodiments, the 'unit' may include one or more processors and/or devices.

In various embodiments, the techniques described in this disclosure and their implementations using systems, devices, etc., support communication methods between networks (or systems) using wireless access technologies such as Code Division Multiple Access (CDMA), Time Division Multiple Access (TDMA), Frequency Division Multiple Access (FDMA), Orthogonal FDMA (OFDMA), Single-Carrier FDMA (SC-FDMA), LTE, GSM, 5G NR, as well as other wireless access technologies such as WiFi or WiMax.

Various other embodiments and features according to the technical concept of the present disclosure are further described below. The teachings herein may be implemented in a wide variety of forms, and it should be clear that any specific structure, function, or both disclosed herein is merely illustrative and not limiting. Based on the teachings herein, one of ordinary skill in the art will know that the aspect disclosed herein can be implemented independently of any other aspects and that two or more of these aspects can be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. For example, a method can be implemented as part of instructions stored on a computer-readable medium for execution on a system, device, apparatus, and/or processor. Also, an aspect may include one or more elements of a claim.

Hereinafter, preferred embodiments of the present invention will be described in detail with reference to the accompanying drawings. Note that the same components in the accompanying drawings are represented, as much as possible, by the same reference numerals. Also, detailed descriptions of well-known functions and configurations that may obscure the gist of the present invention will be omitted.

In describing the embodiments in this specification, descriptions of technical content that is well-known in the technical field to which the present invention belongs and not directly related to the present invention are omitted. This is to deliver the gist of the present invention more clearly without obscuring it by omitting unnecessary descriptions.

For the same reason, some components in the accompanying drawings may be exaggerated, omitted, or schematically illustrated. Also, the size of each component does not entirely reflect its actual size. The same or corresponding components in each drawing are denoted by the same reference numerals.

The advantages and features of the present invention, and ways to achieve them will become apparent with reference to embodiments described below in detail with reference to the accompanying drawings. However, the present invention is not limited to the embodiments disclosed hereinafter but may be implemented in various different forms. The embodiments are provided only for making the disclosure of the present invention complete and for fully conveying the scope of the invention to those skilled in the art, and the present invention is defined only by the scope of the claims. Throughout the specification, the same reference numerals refer to the same components.

At this time, it should be understood that the blocks in the flowcharts and combinations of the flowchart diagrams can be performed by computer program instructions. These computer program instructions can be mounted on a general-purpose computer, a special-purpose computer, or other programmable data processing equipment's processor, so that the instructions executed through the processor of the computer or other programmable data processing equipment create means to perform the functions described in the flowchart block(s). These computer program instructions can also be stored in a computer-usable or computer-readable memory that can direct a computer or other programmable data processing equipment to function in a particular manner, such that the instructions stored in the computer-usable or computer-readable memory produce a manufacturing product that includes instruction means that implement the function described in the flowchart block(s). The computer program instructions can also be loaded onto a computer or other programmable data processing equipment, such that a series of operational steps are performed on the computer or other programmable data processing equipment to create a computer-executed process, such that the instructions executed on the computer or other programmable data processing equipment provide steps for executing the functions described in the flowchart block(s).

Also, each block may represent a module, segment, or portion of code that includes one or more executable instructions to implement the specified logical function(s). It should also be noted that in some alternative implementations, the functions mentioned in the blocks may occur out of order. For example, two consecutively shown blocks may in fact be executed substantially simultaneously, or the blocks may sometimes be executed in reverse order depending on the corresponding function.

The term 'unit' used in this embodiment means a software or hardware component such as FPGA or ASIC, and the 'unit' performs certain roles. However, the 'unit' is not limited to software or hardware. The 'unit' can be configured to be in an addressable storage medium, or to reproduce one or more processors. Therefore, as an example, the 'unit' includes components such as software components, object-oriented software components, class components and task components, processes, functions, attributes, procedures, subroutines, segments of program code, drivers, firmware, microcode, circuits, data, databases, data structures, tables, arrays, and variables. Functions provided in the components and 'units' can be combined into fewer components and 'units', or can be separated into additional components and 'units'. Moreover, the components and 'units' can be implemented to reproduce one or more CPUs in a device or security multimedia card.

Hereinafter, a base station, as a subject that allocates resources to a terminal, may be a Node B, BS (Base Station), eNB (eNode B), gNB (gNode B), radio access unit, base station controller, or at least one of nodes on a network. A terminal may include a UE (User Equipment), MS (Mobile Station), cellular phone, smartphone, computer, or a multimedia system capable of performing communication functions. Also, embodiments of the present disclosure can be applied to other communication systems having similar technical backgrounds or channel forms to the embodiments of the present disclosure described below. Furthermore, embodiments of the present disclosure can be applied to other communication systems with minor modifications, within the judgment of those skilled in the art, without significantly deviating from the scope of the present disclosure.

Terms used in the following description to identify connection nodes, network entities or network functions (NFs), messages, interfaces between network entities, and various identification information, are exemplified for convenience of explanation. Therefore, the present invention is not limited to the terms described below, and other terms with equivalent technical meanings may be used.

For convenience of explanation, some terms and names defined in the 3GPP (3rd generation partnership project long term evolution), IETF (Internet Engineering Task Force), and IEEE 802 Project specifications may be used. However, the present invention is not limited to these terms and names, and can be equally applied to systems following other specifications.

Hereinafter, various embodiments according to the technical concept of the present disclosure will be described in detail in turn.

O-DU (O-RAN Distributed Unit) may be part of an O-RAN system that is typically implemented in software. More specifically, O-DU may be a logical node that hosts the RLC/MAC/High-PHY layer based on lower layer functional split. O-RU (O-RAN Radio Unit) may be a logical node that hosts RF processing and Low-PHY layer based on lower layer functional split. It can perform the role of transmitting and receiving radio signals, which is the most significant characteristic of "TRP" or "RRH" in 3GPP.

UE (User Equipment) is a device that allows users to access network services, such as a mobile phone.

Uplink (UL) refers to the traffic flow passing through different network components from the UE to the network and from the O-RU to the O-DU direction. While the interface from the UE to the O-RU is wireless, the UL traffic from the O-RU to the O-DU can have various forms (e.g., Ethernet connection), including wireless and wired.

Downlink (DL) refers to the traffic flow through network components from the O-DU to the O-RU direction and from the network to the UE. The fronthaul interface from the O-DU to the O-RU can have various forms (e.g., Ethernet), including wired and wireless, while the interface from the O-RU to the UE can be a wireless interface.

The O-RAN specification can include four planes: user plane (U-plane), control plane (C-plane), synchronization plane (S-plane), and management plane (M-plane).

The user plane (U-plane) can be a concept that includes IQ sample data transmitted between the O-DU and the O-RU.

The control plane (C-plane) is a concept that specifically refers to scheduling information, beamforming information transfer, and other real-time controls between the O-DU and the O-RU, and is distinguished from the UE's control plane.

The synchronization plane (S-plane) generally includes configuration and exchange of information for time and frequency synchronization methods, and can include network elements other than the O-DU and O-RU.

The management plane (M-plane) is a concept that represents non-real-time management operations for the O-RU. These non-real-time management tasks can be executed bidirectionally by the O-RU and the O-RU controller, which can reside in the O-DU or service management and orchestration system (SMO), or exist as a separate device.

The M-plane interface is the link between the O-RU controller and the O-RU that exchanges non-real-time management information.

Section Type is a format identifier for C-plane messages, composed of different data fields according to purposes such as scheduling format, beamforming information configuration format, ACK/NACK indication response, LAA information exchange, etc.

Section extension data is optional additional information

attached to the end of section data in C-plane messages, primarily flowing from O-DU to O-RU, which can deliver additional real-time control information to support purposes that cannot be achieved in general configuration format or to achieve optimization.

A shared cell may represent a mode of operation where multiple O-RUs are included in the same cell with one or more component carriers.

Depending on the presence of multiple network elements of O-DU and O-RU, and the link (or data flow), they can be classified as shown in Table 1.

[Table 1]

| Classification of Cell Types According to DU and RU Numbers and Configuration | | | | | |
|---|---|---|---|---|---|
| **Cell type** | **1** | **2A** | **2B** | **3** | **4** |
| Terms | Cell | Shared Cell | Shared Cell | Shared O-RU | Shared Cell, Shared O-RU |
| DU | 1 | 1 | 1 | 2 or more | 2 or more |
| RU | 1 | 2 or more | 2 or more | 1 | 2 or more |
| Uplan- - DL | Single link | Copy | Copy | Single link | Hybrid |
| Uplan- - UL | Single link | Combine | Multi link | Single link | Hybrid |

Starting with the premise of an allowable configuration without additional implementation or significant changes to the UE, basically, the UE does not recognize shared cells and non-shared cells separately but recognizes them as existing cells. Therefore, regardless of the cell type, the identity of the cell is maintained as one. When configured with multiple O-RUs, there is an advantage that it can provide an excellent propagation environment by minimizing interference between radio signals in broadcasting channels such as System Information Block (SIB) 1 provided as a single layer within the cell, and control channels such as group common PDCCH.

However, in shared cells, some signals such as synchronization signal (SS)/PBCH (physical broadcast channel) and CSI-RS (channel state information-reference signal) can be allocated individually or by group to O-RUs to support position and selective operation. Therefore, individual O-RUs in a shared cell are not intended to always perform the same operation.

From the O-DU perspective, cell type 2A (shared cell) has the same basic operating principle as cell type 1. However, due to the configuration of multiple O-RUs, there are differences in the expected performance of the cell and the requirements of the cell configuration. In terms of radio signal quality, there is an increase in noise power proportional to the number of O-RUs in the uplink signal. In terms of message handling, since all network entities process with a single message like cell type 1, functions are required to copy DL directional messages and combine UL directional messages in the intermediate process of the link between O-DU and O-RU. Here, combining may be a concept that includes expressions such as sum, aggregate, add. In O-RAN, the Fronthaul multiplexer (FHM) or cascade O-RU is defined as a network node responsible for such functions.

In FHM mode, a shared cell can be configured to have the FHM function placed between at least one O-DU and multiple O-RUs. The FHM function can perform copy and combining functions, and can also support LLS fronthaul like a regular O-RU. Here, combining can include all expressions such as combine, sum, aggregate, add. Multiple O-RUs connected to the FHM can all share one cell, or they can be designed to be divided into multiple cells and shared by group.

As an example of cascade mode, there is one O-RU that is directly connected to the O-DU, and other O-RUs can be configured to be connected to this O-RU in a serial connection form.

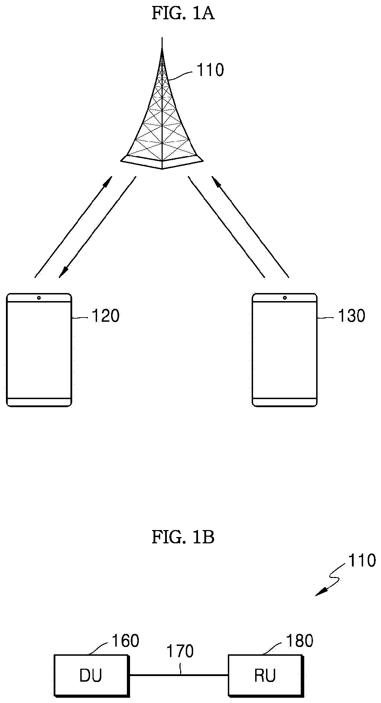

Figure 1a illustrates a wireless communication system according to various embodiments of the present disclosure. Figure 1a exemplifies a base station (110), a first terminal (120), and a second terminal (130) as part of nodes using a wireless channel in the wireless communication system. Figure 1a illustrates only one base station, but one or more other base stations identical or similar to the base station (110) may be further included.

The base station (110) is a network infrastructure that provides wireless access to terminals (120, 130). The base station (110) has coverage defined as a certain geographical area based on the distance to which it can transmit signals. The base station (110) may be referred to as a 'base station,' 'access point (AP),' 'eNodeB (eNB),' '5G node (5th generation node),' 'gNodeB (next generation nodeB, gNB),' 'wireless point,' 'transmission/reception point (TRP),' or other terms with equivalent technical meaning.

Each of the terminals (120, 130) is a device used by a user and communicates with the base station (110) through a wireless channel. The link from the base station (110) to the first terminal (120) or the second terminal (130) is called a downlink (DL), and the link from the first terminal (120) or the second terminal (130) to the base station (110) is called an uplink (UL). In addition, the first terminal (120) and the second terminal (130) can communicate with each other through a wireless channel. In some cases, at least one of the first terminal (120) and the second terminal (130) may operate without user involvement. That is, at least one of the first terminal (120) and the second terminal (130) may be a device performing machine type communication (MTC) and may not be carried by a user. Each of the first terminal (120) and the second terminal (130) may be referred to as a 'terminal,' 'user equipment (UE),' 'customer premises equipment (CPE),' 'mobile station,' 'subscriber station,' 'remote terminal,' 'wireless terminal,' 'electronic device,' 'user device,' or other terms with equivalent technical meaning.

Conventionally, in communication systems with relatively large cell radii of base stations, each base station was installed to include the functions of the digital processing unit (or DU (digital unit)) and the RF (radio frequency) processing unit (or RU (radio unit)). However, as higher frequency bands are used in 4G (4th generation) and/or subsequent communication systems, and as the cell radius of the base station decreases, the number of base stations required to cover a specific area has increased, and the installation cost burden for operators to install the increased base stations has increased. To minimize the installation cost of base stations, a structure was proposed in which the DU and RU of the base station are separated, one or more RUs are connected to one DU through a wired network, and one or more geographically distributed RUs are deployed to cover a specific area.

FIG. 1b illustrates an example of a fronthaul structure according to the functional split of a base station according to various embodiments of the present disclosure. Unlike the backhaul between a base station and a core network, fronthaul refers to entities between wireless LAN and the base station.

Referring to FIG. 1b, the base station (110) may include a DU (160) and an RU (180). The fronthaul (170) between the DU (160) and the RU (180) can be operated through an Fx interface. For the operation of the fronthaul (170), interfaces such as eCPRI (enhanced common public radio interface) and ROE (radio over ethernet) can be used, for example.

As communication technology develops, mobile data traffic increases, and accordingly, the bandwidth requirements in the fronthaul between the DU and RU have significantly increased. In deployments such as C-RAN (centralized/cloud radio access network), the DU performs functions for PDCP (packet data convergence protocol), RLC (radio link control), MAC (media access control), and PHY (physical), and the RU can be implemented to perform functions for the PHY layer in addition to RF (radio frequency) functions.

The DU (160) can be responsible for the higher layer functions of the wireless network. For example, the DU (160) can perform the functions of the MAC layer and part of the PHY layer. Here, part of the PHY layer refers to functions performed at a higher level among the PHY layer functions, such as channel encoding (or channel decoding), scrambling (or descrambling), modulation (or demodulation), and layer mapping (or layer demapping). According to one embodiment, if the DU (160) follows the O-RAN specification, it can be referred to as an O-DU (O-RAN DU). The DU (160) can be alternatively expressed as a first network entity for a base station (e.g., gNB) in embodiments of the present disclosure as needed.

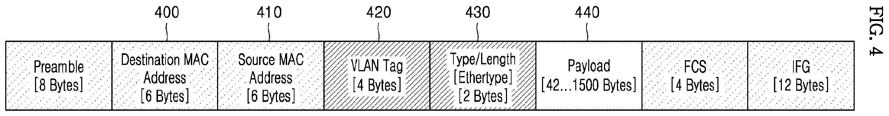

The RU (180) can be responsible for the lower layer functions of the wireless network. For example, the RU (180) can perform part of the PHY layer and RF functions. Here, part of the PHY layer refers to functions performed at a relatively lower level compared to the DU (160) among the PHY layer functions, such as IFFT transformation (or FFT transformation), CP insertion (CP removal), and digital beamforming. An example of such specific functional separation is described in detail in Figure 4. The RU (180) can be referred to as an 'access unit (AU)', 'access point (AP)', 'transmission/reception point (TRP)', 'remote radio head (RRH)', 'radio unit (RU)', or other terms with equivalent technical meaning. According to one embodiment, if the RU (180) follows the O-RAN specification, it can be referred to as an O-RU (O-RAN RU). The DU (180) can be alternatively expressed as a second network entity (e.g., another FHM) for a base station (e.g., gNB) in embodiments of the present disclosure as needed.

In fronthaul communication between the DU (160) and the RU (180), the RU (180) must continuously perform radio transmission and reception for time and frequency resources within a specified error range (e.g., frequency time error, time alignment error, etc.) as defined in 3GPP TS. For this purpose, timing and latency must be managed for each network element in the network infrastructure, and especially the DU and RU that process physical channel signal processing require strict timing control and high accuracy. Functional split option 7 processes signals based on each symbol, so IQ data corresponding to each symbol and its processing information must be transferred between the DU (160) and RU (180) before a certain latency. The message arrival time may have a relationship as in the formula below, determined by the transmission time and delay:

$$\text{Transmission time (window)} + \text{delay time} \le \text{arrival time (window)}$$

$$\text{Transmit window} + \text{transport delay} \le \text{receive window}$$

There is typically a fixed timing processing method of the DU that secures sufficient margin for transmission delay based on the timing of the RU (180), and a dynamic timing processing method of the DU that utilizes the advantage of additionally secured time by varying the message transmission and reception timing for fronthaul transmission delay. This depends on the message timing management capability of the DU (160), so the DU (160) makes the decision. Since processing in the shortest period with optimal resources generally has advantages at the RU (180), the RU (180) provides a delay profile according to certain criteria. These criteria can be sub-carrier spacing, bandwidth, fronthaul line rate, buffer depth, transport flow, etc. Since there are too many parameters between the DU (160) and RU (180) for delay management of messages, optimization based on vendor agreement according to use cases is generally expected rather than convergence through general requirements and relationships. Even if the dynamic timing processing method of the DU (160) is used, this means dynamic changes according to use case and deployment, and does not mean dynamic changes for dynamically changing delays in an already configured cell. Of course, extending the method to respond semi-statically while accompanying service degradation is possible, but currently does not have significant advantages.

O-RAN message timing is managed to ensure smooth transmission and reception between the DU (160) and RU (180) in the relationship of transport delay. The uplink combining function of U-plane messages for FHM and Cascade O-RU can operate based on ta3-prime-max based on the current reference timing tul=0. Ta3-prime-max can be determined considering Ta4-max in the DU and fronthaul transport delay.

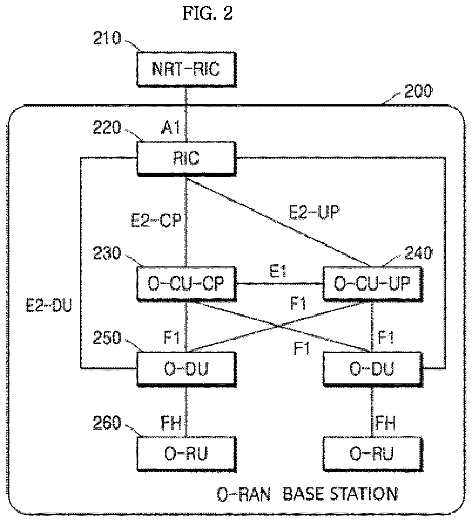

Figure 2 illustrates an O-RAN network system according to one embodiment of the present disclosure. According to Figure 2, the O-RAN network is a network that logically separates the functions of eNB and gNB of existing 4G and 5G systems, and in O-RAN-related standards, NRT (non-realtime)-RAN intelligent controller (RIC) (210), RIC (220) within the O-RAN base station (200), O-CU-CP (230), O-CU-UP (240), O-DU (250), and O-RU (260) can be defined. NRT-RIC (210) is a logical node that enables non-real-time control and optimization of RAN elements and resources, model training and updates, etc., and RIC (220) is a logical node that enables near-real-time control and optimization of RAN elements and resources based on data collected from O-DU (250), O-CU-CP (230), O-CU-UP (240), etc. through the E2 interface by intensively placing servers in one physical location. O-CU, which includes O-CU-CP (230) and O-CU-UP (240), is a logical node that provides the functions of RRC (radio resource control), SDAP (service data adaptation protocol), and PDCP (packet data convergence protocol) protocols. O-CU-CP (230) is a logical node that provides the functions of the C-plane part of RRC and PDCP, and O-CU-UP (240) is a logical node that provides the functions of the U-plane part of SDAP and PDCP. O-CU-CP (230) can be connected to AMF (access and mobility management function) included in the 5G core through the NGAP interface. O-DU (250) is a logical node that provides the functions of RLC, MAC, and high physical layer (high-PHY), and O-RU (260) connected to O-DU (250) is a logical node that provides low physical layer (low-PHY) functions and RF processing. In Figure 2, each logical node is shown in the singular, but each logical node can be connected in multiple numbers. For example, multiple O-RUs (260) can be connected to one O-DU (250), and multiple O-DUs (250) can be connected to one O-CU-UP (240).

The present invention is not limited by the names of each node described above, and the configuration of the present invention can be applied in the case of logical nodes or entities that perform the described functions. Also, the logical nodes can be physically located in the same location or different locations, and their functions can be provided by the same physical device (e.g., processor, controller, etc.) or by different physical devices. For example, the functions of at least one logical node described above can be provided through virtualization in a single physical device. Hereinafter, O-DU and DU, O-RU and RU can be used interchangeably.

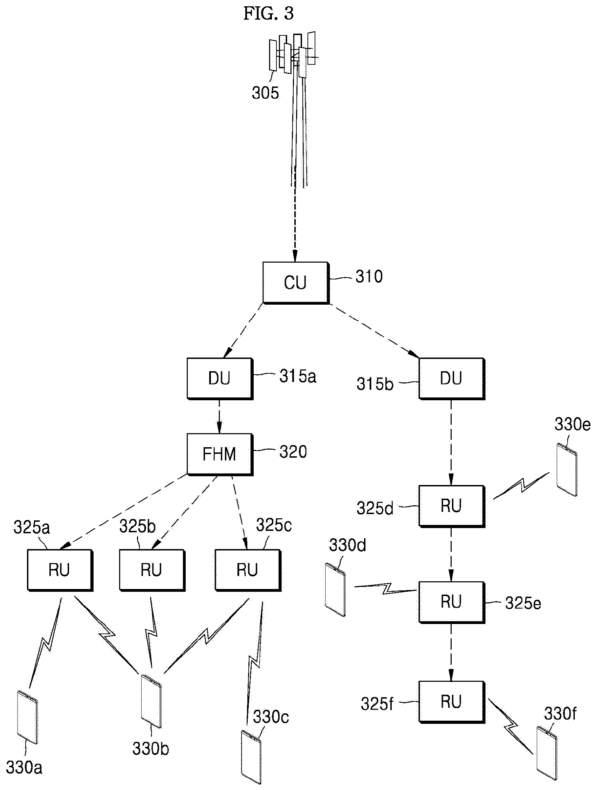

Figure 3 illustrates the structure of an O-RAN wireless communication system according to one embodiment of the present disclosure. The wireless communication system may include a base station (305) and at least one UE (330a, 330b, ..., 330f). The base station may include a CU

(310), at least one DU (315a, 315b), FHM (320), and at least one RU (325a, 325b, ..., 325f). Here, CU, DU, FHM, and RU can all be included within the base station or exist as entities with separate functions.

In one embodiment, the wireless communication system can be a RAN (radio access network) such as open-RAN. Generally, a RAN can include connections between a network including base stations and UEs. O-RAN can include all functions and components within the RAN and can be interoperable with other functions or components. Like traditional RAN structures, O-RAN can also use a CU/DU split structure. The RU can generally have functions for transmitting, receiving, amplifying, and digitizing radio frequency signals. In one embodiment, the RU can be located near antennas and the DU. The CU can be located closer to the core network. The FHM can act as an interface between the RU and DU, and can multiplex or demultiplex information received from the RU before providing it to the DU. CU (310), DU, FHM, and RU can be expressed as O-CU, O-DU, O-FHM, and O-RU respectively.

In the O-RAN architecture, a shared cell structure can include an RU that combines incoming samples before transmitting I/Q samples from the RU to the DU. In the O-RAN architecture utilizing the CU/DU split, the structure can be defined in two modes.

The first mode is the FHM mode, where FHM (320) can retrieve compression information along with I/Q samples through signaling from all O-RUs (325a, 325b, 325c) connected to it. Multiple O-RUs are connected to the FHM, and each RU can be associated with or perform wireless communication with one or more UEs.

The second mode can be defined as cascade mode (or cascade O-RU mode). Cascade O-RU (325d, 325e) can retrieve compression information along with I/Q samples through messaging from Southbound node O-RU (e.g., trailing O-RU, downstream O-RU). The upstream O-RU can perform combining to transmit I/Q samples to the next RU or DU.

Figure 4 illustrates the structure of an Ethernet message according to one embodiment of the present disclosure. The Destination MAC (medium access control) address (400) in the header of the Ethernet message indicates the public address of the RU unit in the case of DL, and the public address of a specific port of the DU's channel card (which can perform operations of the MAC layer responsible for scheduling, operations of the high physical layer (high-PHY), and operations that convert data formats according to the interface between the RU and DU) in the case of UL. The Source MAC Address (410) indicates the RU in the case of UL, and the public address of a specific port of the DU's channel card in the case of DL.

The VLAN (virtual LAN) Tag (420) has a size of 4 bytes and allows C-plane, U-plane, or S-plane messages to be managed by mapping them to different VLAN tags. The TPID (Tag protocol identifier) included in the VLAN Tag (420) can be set to 16 bits and can be set to a value of 0x8100 to identify frames as IEEE 802.1Q tag frames. This field is located in the same position as the Ethertype/Length field in untagged frames, so it can be used to distinguish between untagged and normal frames. The TCI (Tag control information) also included in the VLAN Tag can be set to 16 bits and can include the following three fields. PCP (Priority code point) can express the priority of the frame with 3 bits. DEI (Drop eligible indicator) can be set to 1 bit and can be used separately from PCP or in combination, to identify frames that are good to be removed when traffic becomes congested. VID (VLAN identifier) can be set to 12 bits and is a field indicating which VLAN a frame belongs to. All values other than the reserved values 0x000 and 0xFFF can be used as VLAN identifiers, allowing up to 4,094 VLANs. The reserved value 0x000 indicates that the frame does not belong to any VLAN, in which case 802.1Q only specifies priority and can refer to this as a priority tag. Type/Length (Ethertype) can be set to a fixed value of 0xAEFE as it is for eCPRI.

The payload (440) can include messages according to each plane format including an eCPRI header as shown in Figure 4. The content of each field or information described in relation to Figure 4 of the Ethernet message does not necessarily include all fields, and the present invention can be performed by omitting or adding other fields as needed.

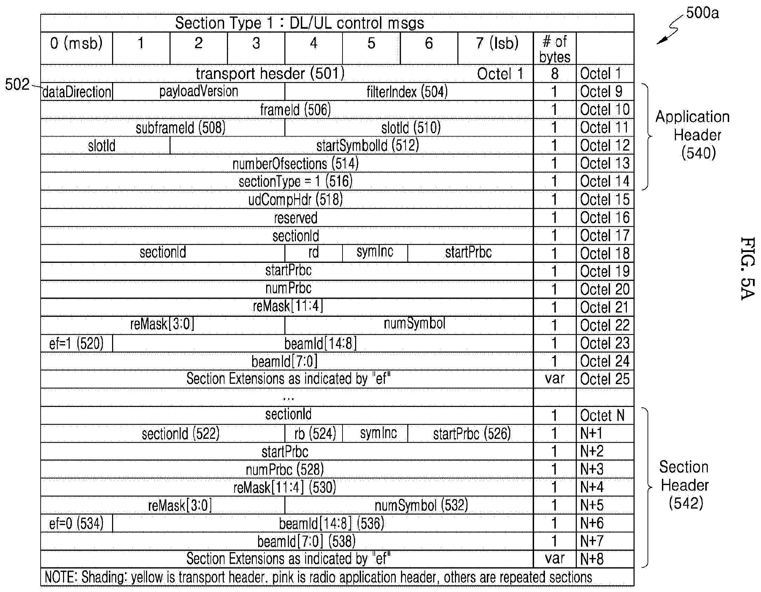

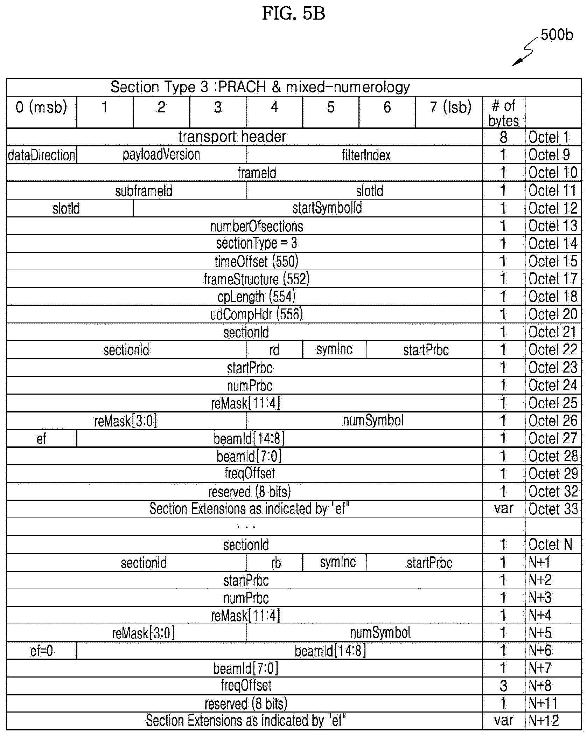

Figures 5a and 5b illustrate examples of C-plane messages according to one embodiment of the present disclosure. Figure 5a shows the structure of a C-plane with section type 1, and Figure 5b may show the structure of a C-plane with section type 3.

First, looking at each field in Figure 5a, the transport header (501) may include information according to the eCPRI header shown in Figure 4 or IEEE-1914.3. dataDirection (502) indicates the direction of the U-Plane message, where 0 may indicate UL and 1 may indicate DL. filterIndex (504) indicates the channel filter of the RU and can be set to 0x1. frameId (506) may indicate a specific frame in 10ms units. SubframeId (508) may indicate a specific subframe in 1ms units within the corresponding frame. slotId (510) may indicate a specific slot within the corresponding frame.

**EP 4 583 475 A1**

numberOfsections (514) may indicate the number of sections indicated by the message. For SectionType (516), one C-plane message can have only one section type. In this example, it may indicate section type 1. udCompHdr (518) may indicate the width (bit) of IQ bits and the compression method for IQ data for all sections of the message. Specifically, the upper 4 bits can indicate iqWidth from 1 to 16 bits, and the lower 4 bits can be compMeth indicating the compression method. The fields described from 502 to 518 can be included as an application header (540) that can be commonly applied in the message, and can be included in a similar structure in all C-plane messages.

A C-plane message of section type 1 may include information about any section. SectionID (522) indicates the ID of the section, which can be used for matching between C-plane and U-plane messages. rb (524) indicates which PRB is used, where 0 indicates that all PRBs are used, and 1 may indicate that every other PRB is used. StartPrbc (526) is used to indicate the first PRB of the corresponding section, and numPrbc (528) may indicate the number of PRBs in the corresponding section. reMask (530) is a bit pattern indicating RE (or subcarrier) corresponding to a specific beam in the PRB, and different beams can be applied within one PRB through reMask. numSymbol (532) may indicate the number of symbols corresponding to the section. The fields described above can be referred to as a section header (542) for each section.

Also, the C-plane message may include a section extension, and whether a section extension is included can be indicated by ef (520). The content of each field or information described in relation to Figure 5a does not necessarily include all fields, and the present invention can be performed by omitting or adding other fields as needed.

Referring to Figure 5b, it is the same as Figure 5a from the transport header to sectiontype, but there are differences in the following fields. Timeoffset (550), framestructure (552), cpLength (554), and udCompHdr (556) are fields that can be checked in the C-plane of section type 3. Timeoffset (550) defines the time offset from the start of the slot to the start of the cyclic prefix (CP). Framestructure (552) defines the frame structure, where the first 4 bits define the size of the FFT/iFFT used to process all IQ data related to the C-plane message, and the remaining 4 bits define the sub-carrier spacing (SCS) and the number of slots per 1ms subframe. cpLength (554) indicates the length of the cyclic prefix. udCompHdr (556) defines the compression method and IQ (in-phase, quadrature) bit width for user data in the data section. Most other fields are similar to Figure 5a, so the explanation is omitted.

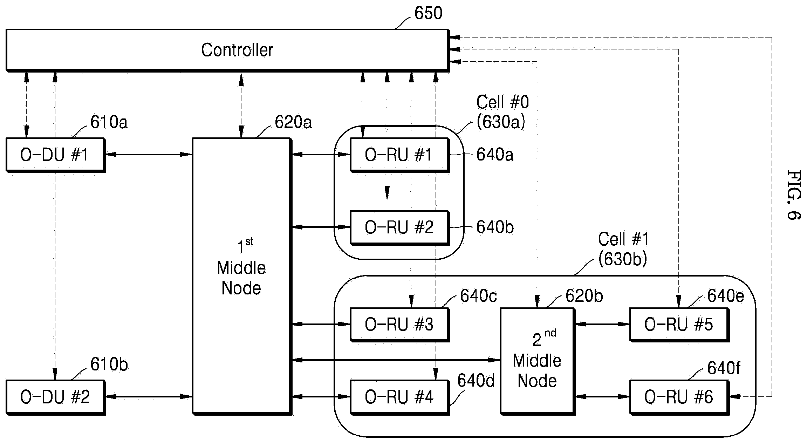

Figure 6 illustrates the structure of an O-RAN base station including a middle node according to one embodiment of the present disclosure.

Referring to Figure 6, the O-RAN base station (or network) (600) may include at least one O-DU (610a, 610b), a middle node (620a, 620b), at least one O-RU (630a, 630b, .., 640f), and a controller (650).

Here, at least one O-DU (610a, 610b) can also be called a northbound node centered on the first middle node (620a), and the middle node (620a, 620b) can be interchangeably used as FHM (620a), Cascade FHM (not shown), or Cascade O-RU (620B), and at least one O-RU (630a, 630b, .., 640f) can be interchangeably used as a southbound node centered on the first middle node (620a). The controller (650) may be in a form where its function is included in the O-DU (610a, 610b), or it may exist as a separate device.

Referring to Figure 6a, the controller (650) can perform direct communication with at least one O-DU (610a, 610b), the middle node (620a, 620b), and at least one O-RU (630a, 630b, .., 640f). The controller (650) can communicate M-plane messages with at least one O-DU (610a, 610b). The controller (650) can communicate M-plane messages with the middle node (620a, 620b). At least one O-DU (610a, 610b) can communicate C/U-Plane messages with the middle node (620a). At least one O-DU (610a, 610b) can directly communicate C/U-Plane messages with at least one O-RU (630a, 630b, .., 640f). The middle node can perform communication with at least one O-RU included in at least one cell (cell #0, cell #1) (630a, 630b). The first middle node (620a) can transmit M-plane, C/U-plane messages received from at least one O-DU (610a, 610b) or the controller (650) to at least one O-RU (630a, 630b, .., 640f). At this time, the first middle node (620a) can copy (COPY) the same message to O-RUs included in each of the same cell and transmit it. For example, the same message can be copied from the first middle node (620a) and delivered to O-RU #1 (630a) and O-RU #2 (630b) included in cell #0 (630a). Also, different messages can be delivered from the first middle node (620a) to cell #0 (630a) and cell #1 (630b). According to one embodiment, the second middle node (620b) may be included inside the cell (630b). In this case, the second middle node (620b) includes O-RU in the southbound direction of the second middle node (620b), and can copy and transmit messages that come down from the upper level to the corresponding O-RU. For example, cell #1 (630b) includes the second middle node (620b), and the second middle node (620b) can copy data received from the first middle node (620a) and transmit it to O-RU#5 (640e) and O-RU#6 (640f) located in the southbound direction.

Referring to Figure 6, at least one O-RU (630a, 630b, .., 640f) can transmit a U-plane message to the first middle node (620a) based on data received from the terminal. The first middle node (620a) can combine messages received from at least one O-RU (630a, 630b, .., 640f). Here, combine can include all expressions such as combine, sum, aggregate, add. The first middle node (620a) can combine messages received from at least one O-RU (630a, 630b, .., 640f) and transmit them to at least one O-DU (610a, 610b). At this time, the first middle node (620a) can perform combining on data received from O-DUs included in the same cell. According to one embodiment, a middle node (620b) may be included inside the cell (630b). In this case, the second middle node (620b) includes O-RU in the southbound direction of the second middle node (620b), and can combine messages received from the corresponding O-RU and transmit them to the upper level. For example, according to the cascade structure in cell #1 (630b), the second middle node (620b) can combine data received from O-RU#5 (640e) and O-RU#6 (640f) located in the lower level and transmit it to the upper level, the first middle node (620a). Here, combine can include all expressions such as combine, sum, aggregate, add. The first middle node (620a) can combine data received from the second middle node (620b) and data received from O-RU#3 (640c) and O-RU#4 (640d) included in cell #1 (630b) and transmit it to O-DU (610a, 620b).

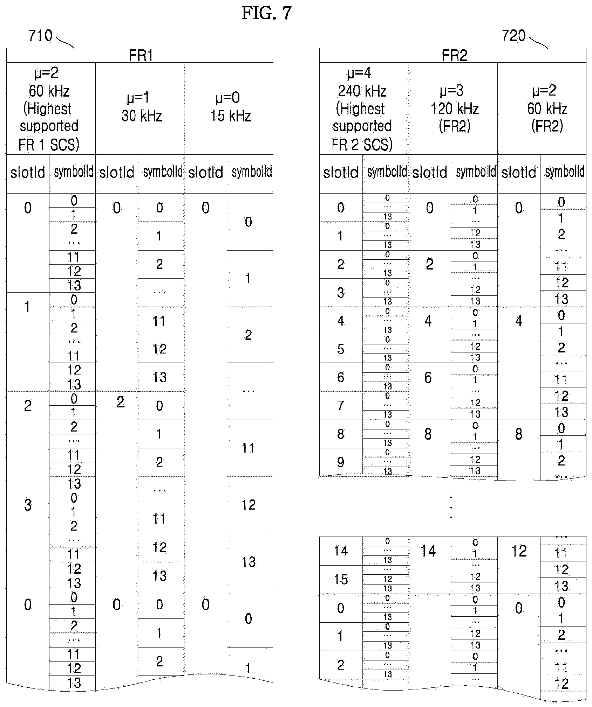

Figure 7 is a table showing slot ID indices according to one embodiment of the present disclosure.

Figure 7 can show information about slot identifier (slotId) and symbol identifier (symbolId) mapping that O-RU can support according to frequency range.

The most likely numerology supported by O-RU in a given frequency range FR1 (710) or FR2 (720) can be used as a common reference (separately for FR1 and FR2) for slot start identified by SlotId. In the communication system, UL and DL must use the same reference numerology for SlotId. If the highest numerology supported by O-RU allows both normal CP and extended CP, normal CP can be used as a reference. Symbol duration and time position can be calculated from the $\mu$ value (which can be configured through the SCS (subcarrier spacing) of the framestructure field of the message or through the M-Plane) and the SlotId field of the C/U-Plane message. The sectionId field value of the C/U-Plane message addressed per eAxC must be unique for each slot identified by the SlotId value.

Referring to Figure 7, for FR1 (710), it shows the case where the maximum SCS supported by O-RU is 60kHz, in which case the maximum number of slots per subframe can be 4. Therefore, slotId is set to 0, 1, 2, 3, and 14 symbolIds can be mapped to each slotId. Also, when FR1 (710) supports 15kHz, 30kHz, and 60kHz, the $\mu$ values are 0, 1, and 2 respectively, and slotId can be set to 0 / 0, 2 / 0, 1, 2, 3 respectively.

For FR2 (720), it shows the case where the maximum SCS supported by O-RU is 240kHz, in which case the maximum number of slots per subframe can be 16. Therefore, slotId is set to 0 to 15, and 14 symbolIds can be mapped to each slotId. Also, when FR2 (720) supports 60kHz, 120kHz, and 240kHz, the $\mu$ values are 2, 3, and 4 respectively, and slotId can be set to 0, 4, 8, 12 / 0, 2, 4, 6, 8, 10, 12, 14 / 0, 1, 2, 3, .., 15 respectively.

However, in this case, although both FR1 (710) and FR2 (720) support 60kHz, different slotIds can be set because the maximum supported SCS is different. For example, for FR1, slotId is set to 0, 1, 2, 3 at 60kHz, but for FR2, it is set to 0, 4, 8, 12, so they are set differently.

This point can be a problem in a case where O-RUs are included in a shared cell as one embodiment. In fronthaul communication between O-DU and O-RU, in the case of a shared cell, the same setting information must be included in the message and delivered. However, when O-RUs included in a shared cell include different frequency ranges such as FR1 and FR2, O-DU has to transmit the same message, but due to different slotId settings, O-RUs with the right settings can operate, but O-RUs with different settings have the problem of not identifying the message and not operating.

Also, even in the case where it is not a shared cell, when DU configures each cell to multiple O-RUs and configures multiple cells, the processing capacity of O-DU can be increased by configuring it to be unified without setting slotId suitable for each individual O-RU. Therefore, a method of setting slotId is required in terms of communication efficiency and reducing computation load in general fronthaul communication.

In conclusion, there is a need for a way to unify slotId settings among O-RUs to configure multiple cells or shared cells in fronthaul communication.

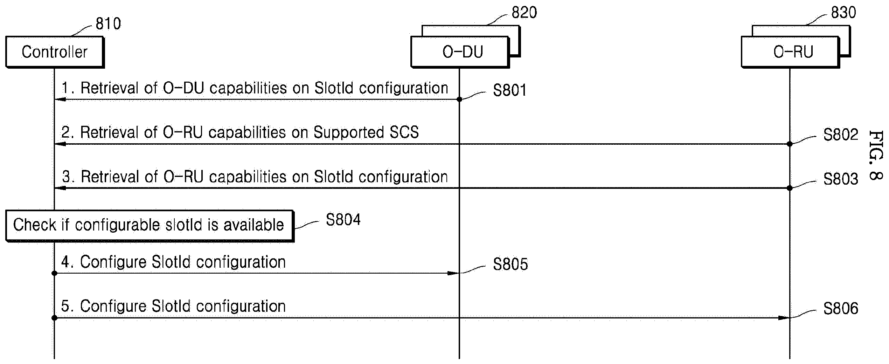

Figure 8 illustrates a method for configuring slot identifier (slotId) settings according to one embodiment of the present disclosure.

Figure 8 consists of a controller (810), at least one O-DU (820), and at least one O-RU (830), where the controller (810) can be identical or similar to the controller in Figures 1a through 6 and can be configured to exist as a separate entity or exist within the O-DU.

In step S801, the controller (810) may request SlotId setting capability information (capabilities on SlotId configuration) from at least one O-DU (or O-DU) (820). If the O-DU (820) receives a request for SlotId setting capability information from the controller (810), it can transmit the information through an M-Plane message. According to another embodiment, the O-DU (820) can periodically transmit SlotId setting capability information that is preset to the controller (810).

In step S802, the controller (810) may request SCS capability information (Capabilities on supported SCS) from at least one O-RU (or O-RU) (830) that constitutes a cell. If the O-RU (830) receives a request for supported SCS capability information from the controller (810), it can transmit the information through an M-Plane message. According to another embodiment, the O-RU (830) can periodically transmit preset supported SCS capability information to the controller (810). For example, in the case of the O-RU of FR1 (710) in Figure 7, the O-RU (830) can transmit information to the controller (810) indicating that the O-RU (830) can support SCS of 15kHz, 30kHz, and 60kHz.

In step S803, the controller (810) may request SlotId setting capability information (capabilities on SlotId configuration) from at least one O-RU (830) that constitutes a cell. If the O-RU (830) receives a request for SlotId setting capability information from the controller (810), it can transmit the information through an M-Plane message. According to another embodiment, the O-RU (830) can periodically transmit preset SlotId setting capability information to the controller (810).

Here, SlotId setting capability information may include information indicating whether the communication node is capable of slotId setting (or change) (Configurable-SlotId-Supported) and information indicating the scope of application of slotId setting (Configurable-slotId-granularity). SlotId setting capability information can be represented as in Table 2 below.

[Table 2]

| Configurable-SlotId-Supported | True/false |
|---|---|
| Configurable-slotId-granularity | O-RU / Transport-flow /Endpoint |

The Configurable-SlotId-Supported field may indicate whether the communication node can change the currently set slotId setting according to the controller's instruction. Here, information indicating whether slotId setting is possible can be included in the form of a configurable-SlotId supported Flag (Boolean type=true) in the YANG model. The configurable-SlotId supported field includes True information if SlotId setting is possible, and may include false information if SlotId setting is not possible. If False or if the corresponding leaf does not exist in the message, the communication node supports the slotId value according to the current specification (for example, slotId set according to the maximum SCS supported by the communication node).

The Configurable-slotId-granularity field may be information indicating the unit to which the communication node applies the setting information when slotId is set. The Configurable-slotId-granularity field can be divided into O-RU level, transport-flow level, and Endpoint level. The O-RU level indicates that one data flow of an O-RU sets one SlotId step per one SCS, the transport-flow level indicates that one SlotId step per one SCS is set for each transport flow (i.e., for each O-DU), and the endpoint level may indicate that one SlotId step per one SCS is set for each endpoint (i.e., one data flow).

In step S804, the controller (810) can determine whether slotId setting is possible based on the slotId setting capability information and supported SCS capability information received from communication nodes (O-DU, O-RU) in steps S801 to S803. Also, if the controller (810) determines that slotId setting is possible, it can set the increment value of slotId value for each SCS within one subframe. For example, the controller (810) can set the slotId value increment as shown in Table 3.

[Table 3]

| SCS | 15kHz | 30kHz | 60kHz | 120kHz | 240kHz | 480kHz | 960kHz |
|---|---|---|---|---|---|---|---|
| n | No need | 0 | 0,1,2,3 | 0,1,2 | 0,1 | 0 | 0 |
| step | | 1 | 1,2,4,8 | 1,2,4 | 1,2 | 1 | 1 |

The controller (810) can set the slotId value increment for each SCS based on Table 3. The calculation method is as follows:

[Equation 1]

$$Step = 2\textasciicircum n \,,\; n=\{0,1,2,3,4\}$$

The controller (810) can generate SlotId setting information based on the above information. The SlotId setting information can be configured in the form shown in Table 4.

[Table 4]

| SlotId-config | Id | | | Unsigned integer |
|---|---|---|---|---|
| | slotId-increment-per-SCS | SCS | | 15kHz, 30kHz, .. |
| | | slotId-increment | | Unsigned integer, 0/1/2/3/4 |

The controller (810) can generate slotId setting information based on Table 4. Here, slotId increment can be determined according to Equation 2.

[Equation 2]

$$\text{SlotId increment} = 2^{\wedge}n , n=\{0,1,2,3,4\}$$

For example, if SCS is 60kHz and n=0, slotId can be determined as 0, 1, 2, 3, and if SCS is 120kHz and n=1, slotId can be determined as 0, 2, 4, 8, 10, 12, 14.

The controller (810) can generate slotId setting information to change the slotId setting for O-RUs that reported slotId setting capability as a result of receiving slotId setting capability information from multiple O-RUs. For example, in the case of a shared cell, if the first O-RU supports slotId setting capability (True) but the second O-RU does not support slotId setting capability (False), it can generate slotId setting information for the first O-RU to change the slotId setting. Also, in the case where all of the multiple O-RUs support slotId setting capability and configure multiple cells, the O-DU can generate slotId setting information according to the SCS that is determined to enable optimal communication.

According to one embodiment, different slotId setting information can be generated for O-RUs considering the Configurable-slotId-granularity field received in steps S801 to S803.

In step S805, the controller (810) can transmit the SlotId setting information (slotId configuration) set in step S804 to the O-DU (820). The O-DU (820) that receives the SlotId setting information can use the set slotId when performing communication with at least one connected O-RU (830).

In step S806, the controller (810) can transmit the same SlotId setting information (slotId configuration) set in step S804 to at least one O-RU (830) that constitutes a cell. The O-RU (830) that receives the SlotId setting information can use the set slotId when performing communication with the connected O-DU (830).

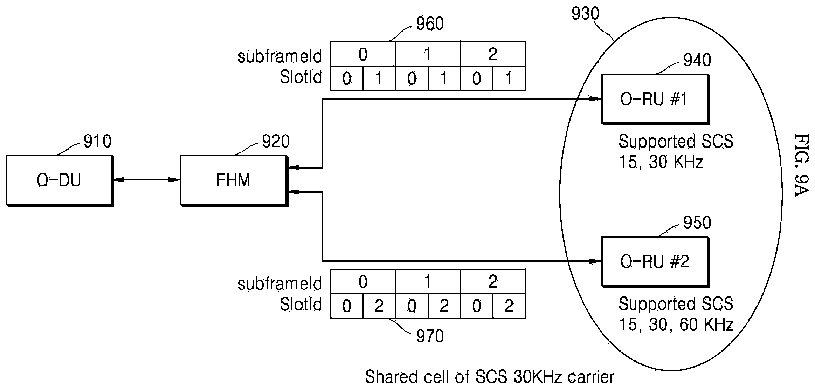

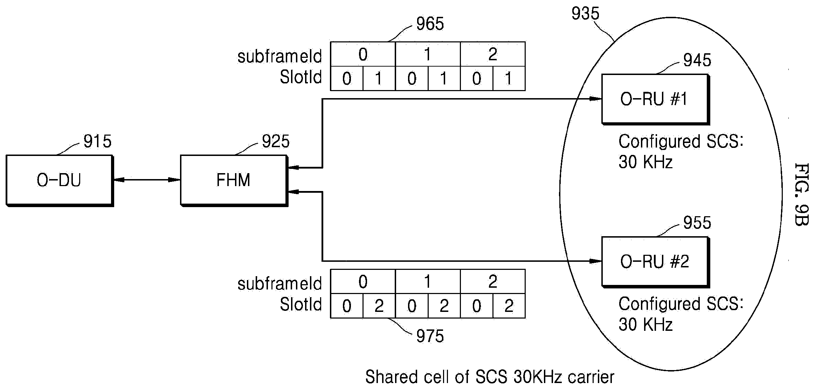

Figure 9a illustrates a method for performing fronthaul communication in a shared cell according to one embodiment of the present disclosure. Figure 9b illustrates a method for performing communication through slotId settings in a shared cell according to another embodiment of the present disclosure.

The O-DU (910), middle node (FHM) (920), first O-RU (940), and second O-RU (950) in Figures 9a and 9b may be identical to the controller, O-DU, middle node, and at least one O-RU in Figures 1a through 8. In Figures 9a and 9b, the O-DU (910) may be in a form that includes the controller.

Referring to Figure 9a, the O-DU (910) can perform fronthaul communication with multiple O-RUs (940, 950) included in a shared cell (930) through a middle node (for example, FHM) (920). Here, there may be a problem because the first O-RU (940) and the second O-RU (950) included in the same shared cell support different SCS. For example, the first O-RU (940) may support SCS of 15, 30kHz, and the second O-RU (950) may support SCS of 15, 30, 60kHz. In this case, the SlotId for each O-RU is set according to the maximum size of SCS that can be supported. Therefore, for the first O-RU (940), the slotId (960) of SCS 30kHz is determined as 0, 1, and the slotId (970) of SCS 30kHz for the second O-RU (950) is determined as 0, 2. However, the O-DU (910) cannot send different slotIds to the first O-RU (940) and the second O-RU (950) included in the same shared cell (violation of copy operation), so it cannot configure a shared cell with the current specification.

Figure 9b shows an example of performing fronthaul communication using unified slotId through slotId setting according to one embodiment of the present disclosure.

Referring to Figure 9b, the O-DU (915) can perform fronthaul communication with multiple O-RUs (945, 955) included in a shared cell (935) through a middle node (for example, FHM) (925). Here, there may be a problem because the third O-RU (945) and the fourth O-RU (955) included in the same shared cell support different SCS, as in Figure 9a. However, slotId setting can be performed based on the method described in Figure 8. The O-DU (915) can receive supported SCS capability information and slotId setting capability information from each of the O-RUs (945, 955). The O-DU (915) can generate slotId setting information based on the received SCS capability information and slotId setting capability information. In Figure 9b, slotId setting information can be generated to set slotId to 0, 1 according to the 30kHz shared cell or the maximum supported SCS of the third O-RU (945), which is 30kHz. The O-DU (915) can transmit the generated slotId setting information to each O-RU (945, 955) through the middle node (925). The third O-RU (945) can perform operations for subsequent messages because it is the same as its existing slotId setting, and the fourth O-RU (955) can change its slotId setting to perform with slotId 0, 1 like the third O-RU because it has slotId setting capability and the received slotId setting is included in the supported SCS. Subsequently, the O-DU (915) can transmit the same message to multiple O-RUs (945, 955) included in the shared cell (935), and the multiple O-RUs (945, 955) with unified slotId according to the slotId setting can receive messages from the O-DU and perform operations.

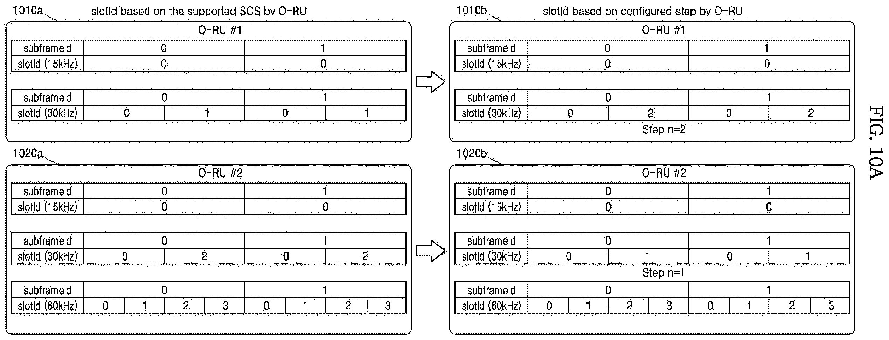

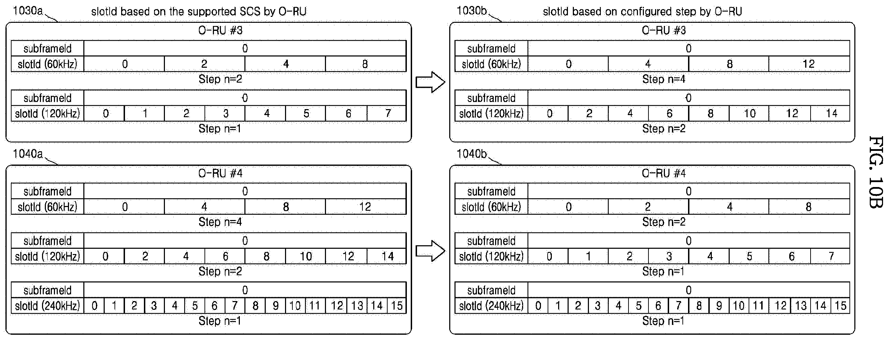

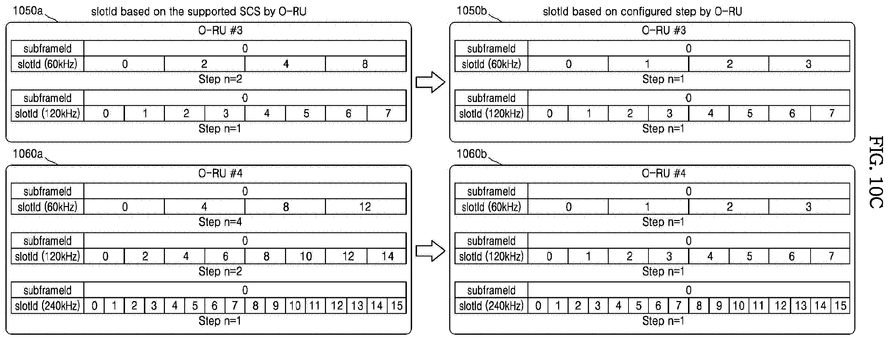

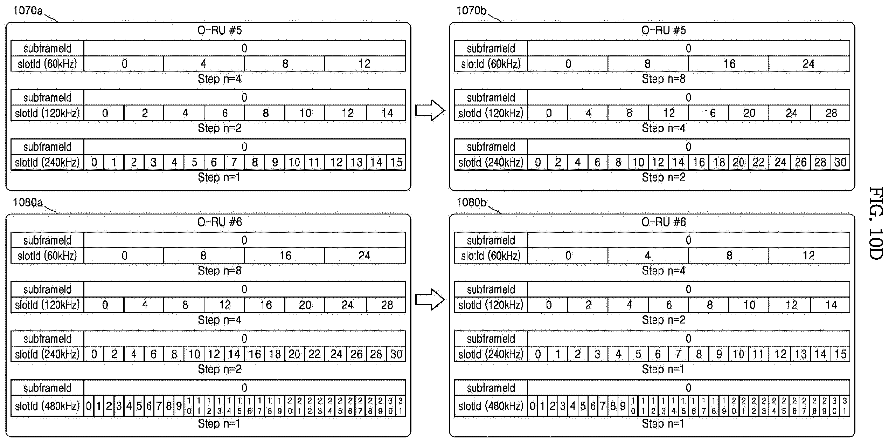

Figure 10a illustrates a first example of applying slotId settings according to one embodiment of the present disclosure. Figure 10b illustrates a second example of applying slotId settings according to one embodiment of the present disclosure. Figure 10c illustrates a third example of applying slotId settings according to one embodiment of the present disclosure. Figure 10d illustrates a fourth example of applying slotId settings according to one embodiment of the present disclosure.

The O-RUs in Figures 10a through 10d may be identical to the O-RUs in Figures 1 through 9b.

Referring to Figure 10a, the first O-RU and the second O-RU are included in the same shared cell. The first O-RU supports SCS of 15kHz and 30kHz, and because the maximum SCS it supports is 30kHz, the slotId (1010a) for 30kHz can be configured as 0, 1. The second O-RU supports SCS of 15kHz, 30kHz, and 60kHz, and because the maximum SCS it supports is 60kHz, the slotId (1020a) for 30kHz can be configured as 0, 2. In this case, slotId setting may be needed. Therefore, each O-RU can transmit slotId setting capability information and supported SCS information to the controller, and receive slotId setting information from the controller. The first method is for the first O-RU to change its slotId setting. This case may apply when the second O-RU does not support slotId change. In this case, the first O-RU can change its slotId setting (1010b) for 30kHz to 0, 2. The second method is for the second O-RU to change its slotId setting. This case may apply when the first O-RU does not support slotId change or when the shared cell is configured with 30kHz. In this case, the second O-RU can change its slotId setting (1020b) for 30kHz to 0, 1.

Referring to Figure 10b, the third O-RU and the fourth O-RU are included in the same shared cell. The third O-RU supports SCS of 60kHz and 120kHz, and because the maximum SCS it supports is 120kHz, the slotId for 60kHz can be configured as 0, 2, 4, 8 and the slotId (1030a) for 120kHz can be configured as 0 to 7. The fourth O-RU supports SCS of 60kHz, 120kHz, and 240kHz, and because the maximum SCS it supports is 240kHz, the slotId (1040a) for 60kHz can be configured as 0, 4, 8, 12, and the slotId for 120kHz can be configured as 0, 2, 4, .., 14. In this case, slotId setting may be needed. Therefore, each O-RU can transmit slotId setting capability information and supported SCS information to the controller and receive slotId setting information. The first method is for the third O-RU to change its slotId setting. This case may apply when the fourth O-RU does not support slotId change. In this case, the third O-RU can change its slotId setting (1030b) for 60kHz to 0, 4, 8, 12, and its slotId setting for 120kHz to 0, 2, 4, .., 14. The second method is for the fourth O-RU to change its slotId setting. This case may apply when the third O-RU does not support slotId change or when the shared cell is configured with 120kHz. In this case, the fourth O-RU can change its slotId setting (1040b) for 60kHz to 0, 2, 4, 8, and its slotId setting for 120kHz to 0 to 7.

Referring to Figure 10c, the third O-RU and the fourth O-RU are included in the same shared cell. Figure 10c shows a method of performing slotId setting through a different approach in a situation similar to Figure 10b. The third O-RU supports SCS of 60kHz and 120kHz, and because the maximum SCS it supports is 120kHz, the slotId for 60kHz can be configured as 0, 2, 4, 8 and the slotId (1050a) for 120kHz can be configured as 0 to 7. The fourth O-RU supports SCS of 60kHz, 120kHz, and 240kHz, and because the maximum SCS it supports is 240kHz, the slotId (1060a) for 60kHz can be configured as 0, 4, 8, 12, and the slotId for 120kHz can be configured as 0, 2, 4, .., 14. In this case, slotId setting may be needed. Therefore, each O-RU can transmit slotId setting capability information and supported SCS information to the controller and receive slotId setting information. Unlike Figure 10b, the case of Figure 10c is a method of unifying to a third slotId setting rather than each O-RU changing to match the slotId setting of the other O-RU. In this case, the third O-RU can set its slotId setting (1050b) for 60kHz to 0, 1, 2, 3, and its slotId setting for 120kHz to 0 to 7. Also, the fourth O-RU can change its slotId setting (1060b) for 60kHz to 0, 1, 2, 3, and its slotId setting for 120kHz to 0 to 7.

Referring to Figure 10d, the fifth O-RU and the sixth O-RU are included in the same shared cell. The fifth O-RU supports SCS of 60kHz, 120kHz, and 240kHz, and because the maximum SCS it supports is 240kHz, the slotId (1070a) for 60kHz can be configured as 0, 4, 8, 12, the slotId for 120kHz as 0, 2, 4, .., 14, and the slotId for 240kHz as 0 to 15. The sixth O-RU supports SCS of 60kHz, 120kHz, 240kHz, and 480kHz, and because the maximum SCS it supports is 480kHz, the slotId (1080a) for 60kHz can be configured as 0, 8, 16, 24, the slotId for 120kHz as 0, 4, 8, .., 28, the slotId for 240kHz as 0, 2, 4, .., 30, and the slotId for 480kHz as 0 to 31. In this case, slotId setting may be needed. Therefore, each O-RU can transmit slotId setting capability information and supported SCS information to the controller and receive slotId setting information. The first method is for the fifth O-RU to change its slotId setting. This case may apply when the sixth O-RU does not support slotId change. In this case, the fifth O-RU can change its slotId setting (1070b) for 60kHz to 0, 8, 16, 24, its slotId setting for 120kHz to 0, 4, 8, .., 28, and its slotId setting for 240kHz to 0, 2, 4, .., 30. The second method is for the sixth O-RU to change its slotId setting. This case may apply when the fifth O-RU does not support slotId change or when the shared cell is configured with 240kHz. In this case, the sixth O-RU can change its slotId setting (1080b) for 60kHz to 0, 4, 8, 12, its slotId setting for 120kHz to 0, 2, 4, .., 14, and its slotId setting for 240kHz to 0 to 15.

Figures 10a to 10d represent only a few embodiments according to the method of the present disclosure, and the actual use examples are not limited to these embodiments, and it is natural that they can be utilized in various ways depending on the situation and the frequency range of the O-RU.

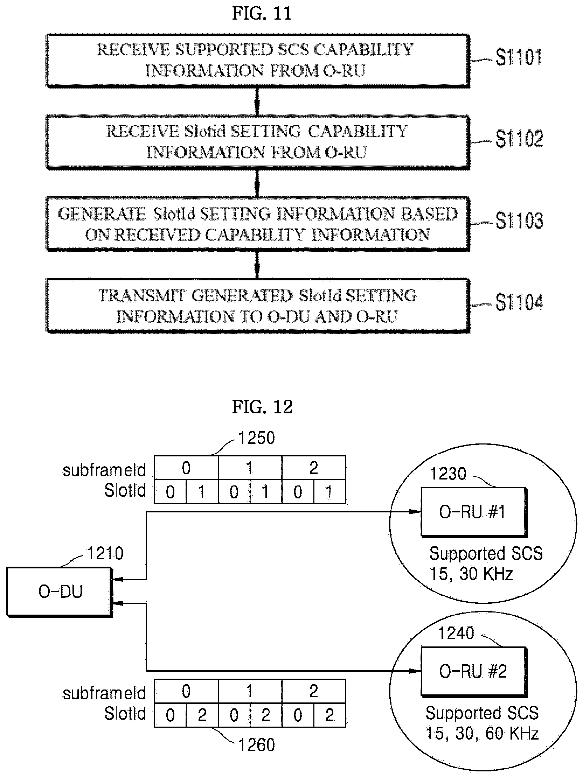

Figure 11 is a flowchart illustrating a method for setting slotId according to one embodiment of the present disclosure.

Figure 11 may be operations performed in the controller, O-DU, and O-RU described in Figures 1a through 10d, and Figure 12.

In step S1101, the controller can receive SCS capability information from the O-RU. According to one embodiment, the controller can request SCS capability information from the O-RU, and receive SCS capability information in response to the request. Or, the O-RU can periodically transmit SCS capability information to the controller. SCS capability information can include information about the SCS that the O-RU supports.

In step S1102, the controller can receive SlotId setting capability information from the O-RU. According to one embodiment, the controller can request SlotId setting capability information from the O-RU, and receive SlotId setting capability information in response to the request. Or, the O-RU can periodically transmit SlotId setting capability information to the controller. SlotId setting capability information can include information indicating whether the corresponding O-RU can change the slotId setting.

In step S1103, the controller can generate SlotId setting information based on the capability information received in steps S1101 and S1102. The controller can identify whether the slotId setting capability information of at least one O-RU among multiple O-RUs includes information indicating that the slotId can be changed. If the slotId setting capability information of the at least one O-RU includes information indicating that the slotId can be changed, the controller can generate slotId setting information based on the SCS capability information of another O-RU whose slotId setting capability information includes information indicating that the slotId cannot be changed.

In step S1104, the controller can transmit the generated slotId setting information to the O-DU and O-RU. The O-RU can change the slotId setting based on the received slotId setting information. The O-DU and O-RU can perform fronthaul communication based on the received slotId setting information.

Figure 12 illustrates a method for performing communication through slotId settings with O-RUs constituting multiple cells according to one embodiment of the present disclosure.

The O-DU (1210), first O-RU (1230), and second O-RU (1240) in Figure 12 may be identical to the controller, O-DU, and at least one O-RU in Figures 1a through 6, and Figure 8. In Figure 12, the O-DU (1210) may be in a form that includes the controller.

Referring to Figure 12, the O-DU (1210) can perform fronthaul communication with multiple O-RUs (1230, 1240) that each constitute a cell. Here, the SCS supported by the first O-RU (1230) and the second O-RU (1240) can be set differently. For example, the first O-RU (1230) may support SCS of 15, 30kHz, and the second O-RU (1240) may support SCS of 15, 30, 60kHz. In this case, the SlotId for each O-RU is set according to the maximum size of SCS that can be supported. Therefore, for the first O-RU (1230), the slotId (1250) of SCS 30kHz is determined as 0, 1, and the slotId (1260) of SCS 30kHz for the second O-RU (1240) is determined as 0, 2. However, the O-DU (1210) has the problem of wasting resources and increasing computational load because it requires separate calculations each time it sends a message to send messages containing different slotIds to the first O-RU (1230) and the second O-RU (1240).

Therefore, slotId setting can be performed based on the method described in this disclosure. The O-DU (1210) can receive supported SCS capability information and slotId setting capability information from each of the multiple O-RUs (1230, 1240). The O-DU (1210) can generate slotId setting information based on the received SCS capability information and slotId setting capability information. The O-DU (1210) can generate slotId setting information to set slotId to 0, 1 according to the maximum supported SCS of the first O-RU (1230), which is 30kHz, considering the fronthaul communication status. For example, the O-DU (1210) can generate slotId setting information with the slotId setting that the most O-RUs among the connected multiple O-RUs include. Or, the O-DU (1210) can generate slotId setting information in a way that maximizes communication quality. The O-DU (1210) can transmit the generated slotId setting information to each O-RU (1230, 1240). The first O-RU (1230) can perform operations for messages received from the O-DU because it is the same as its existing slotId setting, and the second O-RU (1240) can change its slotId setting to perform with slotId 0, 1 like the first O-RU (1230) because it has slotId setting capability and the received slotId setting is included in the supported SCS. Subsequently, the O-DU (1210) can transmit messages with the same slotId configuration to multiple O-RUs (1230, 1240) without separate calculations, and the multiple O-RUs (1230, 1240) with unified slotId according to the slotId setting can receive messages from the O-DU and perform operations.

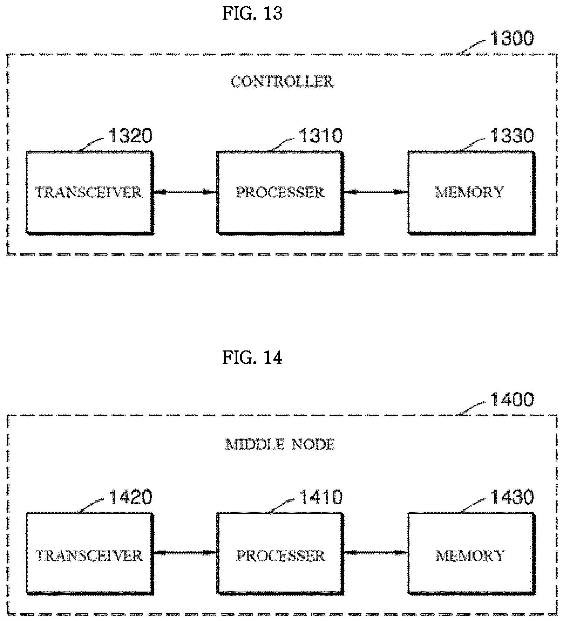

Figure 13 illustrates the configuration of a controller according to one embodiment of the present disclosure.

The controller in Figure 13 can be configured to perform the same or similar operations as the controller or O-DU described in Figures 1a through 12.

According to the embodiment of the present disclosure, the controller (1300) can include each function in a single device, and each function can be divided into separate devices.

The controller (1300) according to one embodiment of the present disclosure can include a controller (or processor) (1310) that controls the overall operation of the controller, a transceiver (or transceiving unit) (1320) including a transmitting unit and a receiving unit, and a memory (1330). Of course, it is not limited to the above examples, and the controller (1300) can include more configurations than shown in Figure 13, or fewer configurations.

According to one embodiment of the present disclosure, the transceiving unit (1320) can transmit and receive signals with other network nodes (for example, southbound node, northbound node, O-RU, O-DU, middle node, higher network entity). The signals transmitted and received with the controller can include C-plane, U-plane, S-plane, M-plane signals, uplink data, and downlink data. Also, the transceiving unit (1320) can receive signals through a wireless path or a wired path such as Fiber and deliver them to the processor (1310), and can transmit signals output from the processor (1310) through the channel.

According to one embodiment of the present disclosure, the processor (1310) can control the controller device to perform any one of the operations of the embodiments in Figures 1 through 12c. Meanwhile, the processor (1310), the memory (1330), and the transceiving unit

(1320) do not necessarily have to be implemented as separate modules, and it is of course possible that they can be implemented as a single component in the form of a single chip. And, the processor (1310), the memory (1330), and the transceiving unit (1320) can be electrically connected. Also, the processor (1310) can be an AP (Application Processor), CP (Communication Processor), circuit, application-specific circuit, or at least one processor.

According to one embodiment of the present disclosure, the memory (1330) can store data such as basic programs, applications, and setting information for the operation of the controller (1300). Also, the memory (1330) can store uplink and downlink data received by the controller. In particular, the memory (1330) can provide stored data according to the request of the processor (1310). The memory (1330) can be composed of storage media such as ROM (Read Only Memory), RAM (Random Access Memory), hard disk, CD-ROM and DVD, or a combination of storage media. Also, the memory (1330) can be multiple. Also, the processor (1310) can perform the aforementioned embodiments based on a program for performing the embodiments of the present disclosure stored in the memory (1330).

Figure 13 illustrates the configuration of a controller according to one embodiment of the present disclosure.

The controller in Figure 13 can be configured to perform the same or similar operations as the controller or O-DU described in Figures 1a through 12.

According to the embodiment of the present disclosure, the controller (1300) can include each function in a single device, and each function can be divided into separate devices.

The controller (1300) according to one embodiment of the present disclosure can include a controller (or processor) (1310) that controls the overall operation of the controller, a transceiver (or transceiving unit) (1320) including a transmitting unit and a receiving unit, and a memory (1330). Of course, it is not limited to the above examples, and the controller (1300) can include more configurations than shown in Figure 13, or fewer configurations.

According to one embodiment of the present disclosure, the transceiving unit (1320) can transmit and receive signals with other network nodes (for example, southbound node, northbound node, O-RU, O-DU, middle node, higher network entity). The signals transmitted and received with the controller can include C-plane, U-plane, S-plane, M-plane signals, uplink data, and downlink data. Also, the transceiving unit (1320) can receive signals through a wireless path or a wired path such as Fiber and deliver them to the processor (1310), and can transmit signals output from the processor (1310) through the channel.

According to one embodiment of the present disclosure, the processor (1310) can control the controller device to perform any one of the operations of the embodiments in Figures 1 through 12c. Meanwhile, the processor (1310), the memory (1330), and the transceiving unit

(1320) do not necessarily have to be implemented as separate modules, and it is of course possible that they can be implemented as a single component in the form of a single chip. And, the processor (1310), the memory (1330), and the transceiving unit (1320) can be electrically connected. Also, the processor (1310) can be an AP (Application Processor), CP (Communication Processor), circuit, application-specific circuit, or at least one processor.

According to one embodiment of the present disclosure, the memory (1330) can store data such as basic programs, applications, and setting information for the operation of the controller (1300). Also, the memory (1330) can store uplink and downlink data received by the controller. In particular, the memory (1330) can provide stored data according to the request of the processor (1310). The memory (1330) can be composed of storage media such as ROM (Read Only Memory), RAM (Random Access Memory), hard disk, CD-ROM and DVD, or a combination of storage media. Also, the memory (1330) can be multiple. Also, the processor (1310) can perform the aforementioned embodiments based on a program for performing the embodiments of the present disclosure stored in the memory (1330).

Figure 14 illustrates the configuration of a middle node according to one embodiment of the present disclosure.

The middle node in Figure 14 can be configured to perform the same or similar operations as the middle node (FHM, cascade FHM, or cascade O-RU) described in Figures 1a through 12.

According to the embodiment of the present disclosure, the middle node (1400) can include the middle node (FHM, cascade O-RU) described in Figures 1 through 12. The middle node can include each function in a single device, and each function can be divided into separate devices.

The middle node (1400) according to one embodiment of the present disclosure can include a controller (or processor) (1410) that controls the overall operation of the middle node, a transceiver (or transceiving unit) (1420) including a transmitting unit and a receiving unit, and a memory (1430). Of course, it is not limited to the above examples, and the middle node (1400) can include more configurations than shown in Figure 14, or fewer configurations.

According to one embodiment of the present disclosure, the transceiving unit (1420) can transmit and receive signals with other network nodes (for example, southbound node, northbound node, O-DU, O-RU, controller, other middle node). The signals transmitted and received with the middle node can include C-plane, U-plane, S-plane, M-plane signals, uplink data, and downlink data. Also, the transceiving unit (1420) can receive signals through a path such as Fiber and deliver them to the processor (1410), and can transmit signals output from the processor (1410) through the channel.

According to one embodiment of the present disclosure, the processor (1410) can control the middle node device to perform any one of the operations of the embodiments in Figures 1 through 12c. Meanwhile, the processor (1410), the memory (1430), and the transceiving unit (1420) do not necessarily have to be implemented as separate modules, and it is of course possible that they can be implemented as a single component in the form of a single chip. And, the processor (1410), the memory (1430), and the transceiving unit (1420) can be electrically connected. Also, the processor (1410) can be an AP (Application Processor), CP (Communication Processor), circuit, application-specific circuit, or at least one processor. The processor (1410) of the middle node (1400) can include a combiner, copier, pager, trigger generator, and parser to perform operations. Each function can be included as a separate device or as a function in the processor (1110). The processor can control to perform the operations of the combiner, copier, pager, trigger generator, and parser. Here, the parser can analyze received C/U, M, S-plane messages and identify information included in the message. The trigger generator can calculate symbol timing or generate combining timing or combining triggers based on the identified information. The pager can call up uplink data stored in memory in response to the generated trigger. The combiner can combine the called data.

According to one embodiment of the present disclosure, the memory (1430) can store data such as basic programs, applications, and setting information for the operation of the middle node. Also, the memory (1430) can store uplink and downlink data received by the middle node. In particular, the memory (1430) can provide stored data according to the call of the processor (1410). The memory (1430) can be composed of storage media such as ROM, RAM, hard disk, CD-ROM and DVD, or a combination of storage media. The memory (1430) can include at least one buffer for temporarily storing uplink data or downlink data. Also, the memory (1430) can be multiple. Also, the processor (1410) can perform the aforementioned embodiments based on a program for performing the embodiments of the present disclosure stored in the memory (1430).

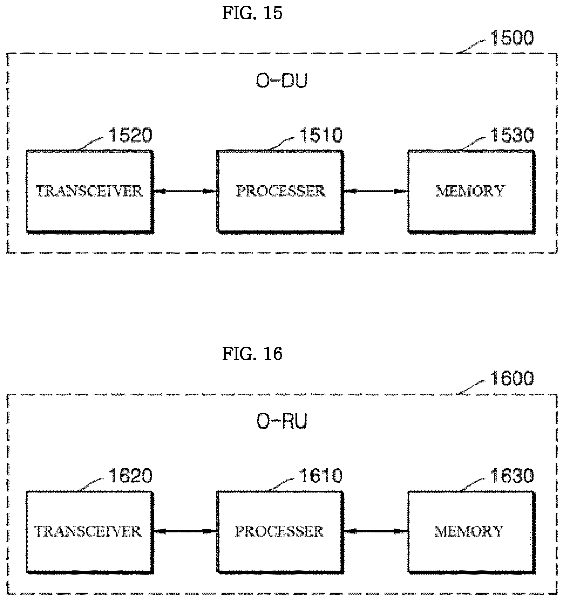

Figure 15 illustrates the configuration of an O-DU according to one embodiment of the present disclosure.

The O-DU in Figure 15 can be configured to perform the same or similar operations as the O-DU described in Figures 1a through 12.

According to the embodiment of the present disclosure, the O-DU (1500) can include each function in a single device, and each function can be divided into separate devices.

The O-DU (1500) according to one embodiment of the present disclosure can include a controller (or processor) (1510) that controls the overall operation of the O-DU, a transceiver (or transceiving unit) (1520) including a transmitting unit and a receiving unit, and a memory (1530). Of course, it is not limited to the above examples, and the O-DU (1500) can include more configurations than shown in Figure 15, or fewer configurations.

According to one embodiment of the present disclosure, the transceiving unit (1520) can transmit and receive signals with other network nodes (for example, southbound node, northbound node, O-RU, controller, middle node, higher network entity). The signals transmitted and received with the middle node can include C-plane, U-plane, S-plane, M-plane signals, uplink data, and downlink data. Also, the transceiving unit (1520) can receive signals through a wireless path or a wired path such as Fiber and deliver them to the processor (1510), and can transmit signals output from the processor (1510) through the channel.

According to one embodiment of the present disclosure, the processor (1510) can control the O-DU device to perform any one of the operations of the embodiments in Figures 1 through 12c. Meanwhile, the processor (1510), the memory (1530), and the transceiving unit (1520) do not necessarily have to be implemented as separate modules, and it is of course possible that they can be implemented as a single component in the form of a single chip. And, the processor (1510), the memory (1530), and the transceiving unit (1520) can be electrically connected. Also, the processor (1510) can be an AP (Application Processor), CP (Communication Processor), circuit, application-specific circuit, or at least one processor.

According to one embodiment of the present disclosure, the memory (1530) can store data such as basic programs, applications, and setting information for the operation of the O-DU (1500). Also, the memory (1530) can store uplink and downlink data received by the O-DU. In particular, the memory (1530) can provide stored data according to the request of the processor (1510). The memory (1530) can be composed of storage media such as ROM, RAM, hard disk, CD-ROM and DVD, or a combination of storage media. Also, the memory (1530) can be multiple. Also, the processor (1510) can perform the aforementioned embodiments based on a program for performing the embodiments of the present disclosure stored in the memory (1530).

Figure 16 illustrates the configuration of an O-RU according to one embodiment of the present disclosure.

The O-RU in Figure 16 can be configured to perform the same or similar operations as the O-RU described in Figures 1a through 12.

According to the embodiment of the present disclosure, the O-RU (1600) can include each function in a single device, and each function can be divided into separate devices.

The O-RU (1600) according to one embodiment of the present disclosure can include a controller (or processor) (1610) that controls the overall operation of the O-RU, a transceiver (or transceiving unit) (1620) including a transmitting unit and a receiving unit, and a memory (1630). Of course, it is not limited to the above examples, and the O-RU (1600) can include more configurations than shown in Figure 16, or fewer configurations.

According to one embodiment of the present disclosure, the transceiving unit (1620) can transmit and receive signals with other network nodes (for example, southbound node, northbound node, O-DU, controller, middle node, higher network entity). The signals transmitted and received with the middle node can include C-plane, U-plane, S-plane, M-plane signals, uplink data, and downlink data. Also, the transceiving unit (1620) can receive signals through a wireless path or a wired path such as Fiber and deliver them to the processor (1610), and can transmit signals output from the processor (1610) through the channel.

According to one embodiment of the present disclosure, the processor (1610) can control the O-RU device to perform any one of the operations of the embodiments in Figure 1 through 12c. Meanwhile, the processor (1610), the memory (1630), and the transceiving unit (1620) do not necessarily have to be implemented as separate modules, and it is of course possible that they can be implemented as a single component in the form of a single chip. And, the processor

(1610), the memory (1630), and the transceiving unit (1620) can be electrically connected. Also, the processor (1610) can be an AP (Application Processor), CP (Communication Processor), circuit, application-specific circuit, or at least one processor.

According to one embodiment of the present disclosure, the memory (1630) can store data such as basic programs, applications, and setting information for the operation of the O-RU (1600). Also, the memory (1630) can store uplink and downlink data received by the O-RU. In particular, the memory (1630) can provide stored data according to the request of the processor (1610). The memory (1630) can be composed of storage media such as ROM, RAM, hard disk, CD-ROM and DVD, or a combination of storage media. Also, the memory (1630) can be multiple. Also, the processor (1610) can perform the aforementioned embodiments based on a program for performing the embodiments of the present disclosure stored in the memory (1630).

Various operations of the methods described above can be performed by any appropriate means capable of performing the corresponding functions. The means may include various hardware and/or software component(s) and/or module(s), including, but not limited to, a circuit, an application specific integrated circuit (ASIC), or a processor. Generally, where there are operations illustrated in the drawings, those operations may have corresponding means-plus-function components with similar numbering.

Various exemplary logical blocks, modules, and circuits described in connection with the present disclosure may be implemented or performed with a general-purpose processor, a digital signal processor (DSP), an ASIC, an FPGA or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Also, the term "determining" encompasses a wide variety of actions. For example, "determining" may include calculating, computing, processing, deriving, investigating, looking up (e.g., looking up in a table, a database or another data structure), ascertaining, etc. Also, "determining" may include receiving (e.g., receiving information), accessing (accessing data in memory), etc. Also, "determining" may include resolving, selecting, choosing, establishing, etc.

Those skilled in the art will appreciate that, within the scope of the present disclosure's technical idea, various modifications and variations are possible without departing from the essential characteristics of the present disclosure's technical idea.

Therefore, the embodiments illustrated in this disclosure are not intended to limit the technical idea of the present disclosure but to describe it, and the scope of the technical idea of the present disclosure is not limited by these embodiments.

The scope of protection of the technical idea of the present disclosure should be interpreted by the following claims, and all technical ideas within an equivalent scope should be interpreted as being included in the scope of the technical idea of the present disclosure.

## Claims

**1.** A method performed by a controller in a communication system, comprising:

receiving sub-carrier spacing (SCS) capability information from each of a plurality of O-RUs;
receiving slot identifier (slotId) setting capability information from each of the plurality of O-RUs;
generating slotId setting information based on the received SCS capability information and slotId setting capability information; and
transmitting the generated slotId setting information to an O-DU and the plurality of O-RUs.

**2.** The method of claim 1, wherein the SCS capability information includes information indicating what SCS each of the plurality of O-RUs supports, and

the slotId setting capability information includes information indicating whether each of the plurality of O-RUs can change the slotId.

3. The method of claim 1, wherein generating the slotId setting information based on the received SCS capability information and slotId setting capability information comprises:

   identifying whether the slotId setting capability information of at least one O-RU among the plurality of O-RUs includes information indicating that the slotId can be changed; and
   when the slotId setting capability information of the at least one O-RU includes information indicating that the slotId can be changed, generating the slotId setting information based on the SCS capability information of an O-RU whose slotId setting capability information includes information indicating that the slotId cannot be changed.

4. The method of claim 1, wherein generating the slotId setting information based on the received SCS capability information and slotId setting capability information comprises:

   identifying whether the slotId setting capability information of at least one O-RU among the plurality of O-RUs includes information indicating that the slotId can be changed; and
   generating the slotId setting information of the at least one O-RU based on communication quality of the controller.

5. A controller in a communication system, comprising:

   a transceiver;
   a memory; and
   at least one processor electrically connected to the transceiver and the memory,
   wherein the at least one processor is configured to:

      receive sub-carrier spacing (SCS) capability information from each of a plurality of O-RUs,
      receive slot identifier (slotId) setting capability information from each of the plurality of O-RUs,
      generate slotId setting information based on the received SCS capability information and slotId setting capability information, and
      transmit the generated slotId setting information to an O-DU and the plurality of O-RUs.

6. The controller of claim 5, wherein the SCS capability information includes information indicating what SCS each of the plurality of O-RUs supports, and
   the slotId setting capability information includes information indicating whether each of the plurality of O-RUs can change the slotId.

7. The controller of claim 5, wherein the at least one processor is configured to:

   identify whether the slotId setting capability information of at least one O-RU among the plurality of O-RUs includes information indicating that the slotId can be changed, and
   when the slotId setting capability information of the at least one O-RU includes information indicating that the slotId can be changed, generate the slotId setting information based on the SCS capability information of an O-RU whose slotId setting capability information includes information indicating that the slotId cannot be changed.

8. The controller of claim 5, wherein the at least one processor is configured to:

   identify whether the slotId setting capability information of at least one O-RU among the plurality of O-RUs includes information indicating that the slotId can be changed, and
   generate the slotId setting information of the at least one O-RU based on communication quality of the controller.

FIG. 1A

FIG. 1B

FIG. 2

FIG. 3

FIG. 4

| Preamble [8 Bytes] | Destination MAC Address [6 Bytes] | Source MAC Address [6 Bytes] | VLAN Tag [4 Bytes] | Type/Length [Ethertype] [2 Bytes] | Payload [42...1500 Bytes] | FCS [4 Bytes] | IFG [12 Bytes] |
|---|---|---|---|---|---|---|---|
| | 400 | 410 | 420 | 430 | 440 | | |

| 0 (msb) | 1 | 2 | 3 | 4 | 5 | 6 | 7 (lsb) | # of bytes | |
|---|---|---|---|---|---|---|---|---|---|
| Section Type 1 : DL/UL control msgs | | | | | | | | | |
| transport hesder (501) | | | | | | | Octel 1 | 8 | Octel 1 |
| dataDirection | payloadVersion | | | filterIndex (504) | | | | 1 | Octel 9 |
| frameId (506) | | | | | | | | 1 | Octel 10 |
| subframeId (508) | | | | slotId (510) | | | | 1 | Octel 11 |
| slotId | | startSymbolId (512) | | | | | | 1 | Octel 12 |
| numberOfsections (514) | | | | | | | | 1 | Octel 13 |
| sectionType = 1 (516) | | | | | | | | 1 | Octel 14 |
| udCompHdr (518) | | | | | | | | 1 | Octel 15 |
| reserved | | | | | | | | 1 | Octel 16 |
| sectionId | | | | | | | | 1 | Octel 17 |
| sectionId | | | | rd | symInc | startPrbc | | 1 | Octel 18 |
| startPrbc | | | | | | | | 1 | Octel 19 |
| numPrbc | | | | | | | | 1 | Octel 20 |
| reMask[11:4] | | | | | | | | 1 | Octel 21 |
| reMask[3:0] | | | | numSymbol | | | | 1 | Octel 22 |
| ef=1 (520) | beamId[14:8] | | | | | | | 1 | Octel 23 |
| beamId[7:0] | | | | | | | | 1 | Octel 24 |
| Section Extensions as indicated by "ef" | | | | | | | | var | Octel 25 |
| ... | | | | | | | | | |
| sectionId | | | | | | | | 1 | Octet N |
| sectionId (522) | | | | rb (524) | symInc | startPrbc (526) | | 1 | N+1 |
| startPrbc | | | | | | | | 1 | N+2 |
| numPrbc (528) | | | | | | | | 1 | N+3 |
| reMask[11:4] (530) | | | | | | | | 1 | N+4 |
| reMask[3:0] | | | | numSymbol (532) | | | | 1 | N+5 |
| ef=0 (534) | beamId[14:8] (536) | | | | | | | 1 | N+6 |
| beamId[7:0] (538) | | | | | | | | 1 | N+7 |
| Section Extensions as indicated by "ef" | | | | | | | | var | N+8 |
| NOTE: Shading: yellow is transport header. pink is radio application header, others are repeated sections | | | | | | | | | |

502

500a

Application Header (540)

Section Header (542)

FIG. 5A

EP 4 583 475 A1

## FIG. 5B

500b

| 0 (msb) | 1 | 2 | 3 | 4 | 5 | 6 | 7 (lsb) | # of bytes | |
|---|---|---|---|---|---|---|---|---|---|
| Section Type 3 :PRACH & mixed-numerology | | | | | | | | | |
| transport header | | | | | | | | 8 | Octel 1 |
| dataDirection | payloadVersion | | | filterIndex | | | | 1 | Octel 9 |
| frameId | | | | | | | | 1 | Octel 10 |
| subframeId | | | | slotId | | | | 1 | Octel 11 |
| slotId | | | startSymbolId | | | | | 1 | Octel 12 |
| numberOfsections | | | | | | | | 1 | Octel 13 |
| sectionType = 3 | | | | | | | | 1 | Octel 14 |
| timeOffset (550) | | | | | | | | 1 | Octel 15 |
| frameStructure (552) | | | | | | | | 1 | Octel 17 |
| cpLength (554) | | | | | | | | 1 | Octel 18 |
| udCompHdr (556) | | | | | | | | 1 | Octel 20 |
| sectionId | | | | | | | | 1 | Octel 21 |
| sectionId | | | rd | symInc | startPrbc | | | 1 | Octel 22 |
| startPrbc | | | | | | | | 1 | Octel 23 |
| numPrbc | | | | | | | | 1 | Octel 24 |
| reMask[11:4] | | | | | | | | 1 | Octel 25 |
| reMask[3:0] | | | numSymbol | | | | | 1 | Octel 26 |
| ef | beamId[14:8] | | | | | | | 1 | Octel 27 |
| beamId[7:0] | | | | | | | | 1 | Octet 28 |
| freqOffset | | | | | | | | 1 | Octet 29 |
| reserved (8 bits) | | | | | | | | 1 | Octet 32 |
| Section Extensions as indicated by "ef" | | | | | | | | var | Octet 33 |
| . . . | | | | | | | | | |
| sectionId | | | | | | | | 1 | Octet N |
| sectionId | | | rb | symInc | startPrbc | | | 1 | N+1 |
| startPrbc | | | | | | | | 1 | N+2 |
| numPrbc | | | | | | | | 1 | N+3 |
| reMask[11:4] | | | | | | | | 1 | N+4 |
| reMask[3:0] | | | numSymbol | | | | | 1 | N+5 |
| ef=0 | beamId[14:8] | | | | | | | 1 | N+6 |
| beamId[7:0] | | | | | | | | 1 | N+7 |
| freqOffset | | | | | | | | 3 | N+8 |
| reserved (8 bits) | | | | | | | | 1 | N+11 |
| Section Extensions as indicated by "ef" | | | | | | | | var | N+12 |

FIG. 6

## FIG. 7

710

**FR1**

| μ=2 60 kHz (Highest supported FR 1 SCS) | | μ=1 30 kHz | | μ=0 15 kHz | |
|---|---|---|---|---|---|
| slotId | symbolId | slotId | symbolId | slotId | symbolId |
| 0 | 0 | 0 | 0 | 0 | 0 |
|  | 1 |  |  |  |  |
|  | 2 |  | 1 |  |  |
|  | ... |  |  |  |  |
|  | 11 |  | 2 |  | 1 |
|  | 12 |  | ... |  |  |
|  | 13 |  | 11 |  | 2 |
| 1 | 0 |  | 12 |  |  |
|  | 1 |  | 13 |  | ... |
|  | 2 | 2 | 0 |  |  |
|  | ... |  | 1 |  | 11 |
|  | 11 |  | 2 |  |  |
|  | 12 |  | ... |  | 12 |
|  | 13 |  | 11 |  |  |
| 2 | 0 |  | 12 |  | 13 |
|  | 1 |  | 13 |  |  |
|  | 2 |  |  |  |  |
|  | ... |  |  |  |  |
|  | 11 |  | 11 |  |  |
|  | 12 |  | 12 |  |  |
|  | 13 |  | 13 |  |  |
| 3 | 0 | 0 | 0 | 0 | 0 |
|  | 1 |  | 1 |  |  |
|  | 2 |  | 2 |  | 1 |
|  | ... |  |  |  |  |
|  | 11 |  |  |  |  |
|  | 12 |  |  |  |  |
|  | 13 |  |  |  |  |
| 0 | 0 |  |  |  |  |
|  | 1 |  |  |  |  |
|  | 2 |  |  |  |  |
|  | ... |  |  |  |  |
|  | 11 |  |  |  |  |
|  | 12 |  |  |  |  |
|  | 13 |  |  |  |  |

720

**FR2**

| μ=4 240 kHz (Highest supported FR 2 SCS) | | μ=3 120 kHz (FR2) | | μ=2 60 kHz (FR2) | |
|---|---|---|---|---|---|
| slotId | symbolId | slotId | symbolId | slotId | symbolId |
| 0 | 0 ... 13 | 0 | 0 / 1 / ... / 12 / 13 | 0 | 0 |
| 1 | 0 ... 13 |  |  |  | 1 |
| 2 | 0 ... 13 | 2 | 0 / 1 / ... / 12 / 13 |  | 2 |
| 3 | 0 ... 13 |  |  |  | ... |
| 4 | 0 ... 13 | 4 | 0 / 1 / ... / 12 / 13 | 4 | 11 |
| 5 | 0 ... 13 |  |  |  | 12 |
| 6 | 0 ... 13 | 6 | 0 / 1 / ... / 12 / 13 |  | 13 |
| 7 | 0 ... 13 |  |  |  | 0 |
| 8 | 0 ... 13 | 8 | 0 / 1 / ... / 12 / 13 | 8 | 1 |
| 9 | 0 ... 13 |  |  |  | 2 |
| ⋮ |  |  |  |  | ... |
| 14 | 0 ... 13 | 14 | 0 / 1 / ... / 12 / 13 | 12 | 11 |
| 15 | 12 / 13 |  |  |  | 12 |
| 0 | 0 ... 13 | 0 | 0 / 1 / ... / 12 / 13 | 0 | 13 |
| 1 | 0 ... 13 |  |  |  | 0 |
| 2 | 0 ... 13 |  | 0 / 1 / ... |  | 1 |
|  |  |  |  |  | 2 |
|  |  |  |  |  | ... |
|  |  |  |  |  | 11 |
|  |  |  |  |  | 12 |

FIG. 8

820

830

810

Controller

O-DU

O-RU

1. Retrieval of O-DU capabilities on SlotId configuration — S801

2. Retrieval of O-RU capabilities on Supported SCS — S802

3. Retrieval of O-RU capabilities on SlotId configuration — S803

Check if configurable slotId is available — S804

4. Configure SlotId configuration — S805

5. Configure SlotId configuration — S806

FIG. 9A

## FIG. 9B

**FIG. 10A**

1010a — slotId based on the supported SCS by O-RU

**O-RU #1**

| subframeId | 0 | 1 |
|---|---|---|
| slotId (15kHz) | 0 | 0 |

| subframeId | 0 | | 1 | |
|---|---|---|---|---|
| slotId (30kHz) | 0 | 1 | 0 | 1 |

1020a — **O-RU #2**

| subframeId | 0 | 1 |
|---|---|---|
| slotId (15kHz) | 0 | 0 |

| subframeId | 0 | | 1 | |
|---|---|---|---|---|
| slotId (30kHz) | 0 | 2 | 0 | 2 |

| subframeId | 0 | | | | 1 | | | |
|---|---|---|---|---|---|---|---|---|
| slotId (60kHz) | 0 | 1 | 2 | 3 | 0 | 1 | 2 | 3 |

1010b — slotId based on configured step by O-RU

**O-RU #1**

| subframeId | 0 | 1 |
|---|---|---|
| slotId (15kHz) | 0 | 0 |

| subframeId | 0 | | 1 | |
|---|---|---|---|---|
| slotId (30kHz) | 0 | 2 | 0 | 2 |

Step n=2

1020b — **O-RU #2**

| subframeId | 0 | 1 |
|---|---|---|
| slotId (15kHz) | 0 | 0 |

| subframeId | 0 | | 1 | |
|---|---|---|---|---|
| slotId (30kHz) | 0 | 1 | 0 | 1 |

Step n=1

| subframeId | 0 | | | | 1 | | | |
|---|---|---|---|---|---|---|---|---|
| slotId (60kHz) | 0 | 1 | 2 | 3 | 0 | 1 | 2 | 3 |

FIG. 10B

## FIG. 10C

FIG. 10D

1070a

**O-RU #5**

| subframeId | 0 | | | |
|---|---|---|---|---|
| slotId (60kHz) | 0 | 4 | 8 | 12 |

Step n=4

| subframeId | 0 | | | | | | | |
|---|---|---|---|---|---|---|---|---|
| slotId (120kHz) | 0 | 2 | 4 | 6 | 8 | 10 | 12 | 14 |

Step n=2

| subframeId | 0 | | | | | | | | | | | | | | | |
|---|---|---|---|---|---|---|---|---|---|---|---|---|---|---|---|---|
| slotId (240kHz) | 0 | 1 | 2 | 3 | 4 | 5 | 6 | 7 | 8 | 9 | 10 | 11 | 12 | 13 | 14 | 15 |

Step n=1

1070b

**O-RU #5**

| subframeId | 0 | | | |
|---|---|---|---|---|
| slotId (60kHz) | 0 | 8 | 16 | 24 |

Step n=8

| subframeId | 0 | | | | | | | |
|---|---|---|---|---|---|---|---|---|
| slotId (120kHz) | 0 | 4 | 8 | 12 | 16 | 20 | 24 | 28 |

Step n=4

| subframeId | 0 | | | | | | | | | | | | | | | |
|---|---|---|---|---|---|---|---|---|---|---|---|---|---|---|---|---|
| slotId (240kHz) | 0 | 2 | 4 | 6 | 8 | 10 | 12 | 14 | 16 | 18 | 20 | 22 | 24 | 26 | 28 | 30 |

Step n=2

1080a

**O-RU #6**

| subframeId | 0 | | | |
|---|---|---|---|---|
| slotId (60kHz) | 0 | 8 | 16 | 24 |

Step n=8

| subframeId | 0 | | | | | | | |
|---|---|---|---|---|---|---|---|---|
| slotId (120kHz) | 0 | 4 | 8 | 12 | 16 | 20 | 24 | 28 |

Step n=4

| subframeId | 0 | | | | | | | | | | | | | | | |
|---|---|---|---|---|---|---|---|---|---|---|---|---|---|---|---|---|
| slotId (240kHz) | 0 | 2 | 4 | 6 | 8 | 10 | 12 | 14 | 16 | 18 | 20 | 22 | 24 | 26 | 28 | 30 |

Step n=2

| subframeId | 0 | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|
| slotId (480kHz) | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

Step n=1

1080b

**O-RU #6**

| subframeId | 0 | | | |
|---|---|---|---|---|
| slotId (60kHz) | 0 | 4 | 8 | 12 |

Step n=4

| subframeId | 0 | | | | | | | |
|---|---|---|---|---|---|---|---|---|
| slotId (120kHz) | 0 | 2 | 4 | 6 | 8 | 10 | 12 | 14 |

Step n=2

| subframeId | 0 | | | | | | | | | | | | | | | |
|---|---|---|---|---|---|---|---|---|---|---|---|---|---|---|---|---|
| slotId (240kHz) | 0 | 1 | 2 | 3 | 4 | 5 | 6 | 7 | 8 | 9 | 10 | 11 | 12 | 13 | 14 | 15 |

Step n=1

| subframeId | 0 | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|
| slotId (480kHz) | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |

Step n=1

FIG. 11

RECEIVE SUPPORTED SCS CAPABILITY INFORMATION FROM O-RU — S1101

RECEIVE SlotId SETTING CAPABILITY INFORMATION FROM O-RU — S1102

GENERATE SlotId SETTING INFORMATION BASED ON RECEIVED CAPABILITY INFORMATION — S1103

TRANSMIT GENERATED SlotId SETTING INFORMATION TO O-DU AND O-RU — S1104

FIG. 12

1250

| subframeId | 0 | | 1 | | 2 | |
|---|---|---|---|---|---|---|
| SlotId | 0 | 1 | 0 | 1 | 0 | 1 |

1230

O-RU #1

Supported SCS
15, 30 KHz

1210

O-DU

1240

O-RU #2

Supported SCS
15, 30, 60 KHz

| subframeId | 0 | | 1 | | 2 | |
|---|---|---|---|---|---|---|
| SlotId | 0 | 2 | 0 | 2 | 0 | 2 |

1260

FIG. 13

FIG. 14

FIG. 15

1500

O-DU

1520

TRANSCEIVER

1510

PROCESSER

1530

MEMORY

FIG. 16

1600

O-RU

1620

TRANSCEIVER

1610

PROCESSER

1630

MEMORY

## INTERNATIONAL SEARCH REPORT

| International application No. |
| --- |
| **PCT/KR2023/012931** |

### A. CLASSIFICATION OF SUBJECT MATTER

**H04L 27/26**(2006.01)i; **H04W 72/04**(2009.01)i

According to International Patent Classification (IPC) or to both national classification and IPC

### B. FIELDS SEARCHED

Minimum documentation searched (classification system followed by classification symbols)

H04L 27/26(2006.01); H04L 1/00(2006.01); H04L 29/06(2006.01); H04L 5/00(2006.01); H04W 24/08(2009.01); H04W 28/06(2009.01); H04W 72/04(2009.01); H04W 92/20(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: O-RAN(open radio access network), RU(radio unit), DU(distributed unit), 서브 캐리어 스페이싱(subcarrier spacing), 능력 정보(capability information), 슬롯 식별자(slot identifier), 설정 능력 (configuration capability)

### C. DOCUMENTS CONSIDERED TO BE RELEVANT

| Category* | Citation of document, with indication, where appropriate, of the relevant passages | Relevant to claim No. |
| --- | --- | --- |
| A | WO 2022-060180 A1 (SAMSUNG ELECTRONICS CO., LTD.) 24 March 2022 (2022-03-24)<br>See paragraphs [0106]-[0237]; and figures 6a-7. | 1-8 |
| A | EP 4007350 A1 (NEC CORPORATION) 01 June 2022 (2022-06-01)<br>See paragraphs [0050]-[0067]; and figures 10-16. | 1-8 |
| A | US 2022-0182172 A1 (QUALCOMM INCORPORATED) 09 June 2022 (2022-06-09)<br>See paragraphs [0086]-[0104]; and figures 2-3. | 1-8 |
| A | WO 2022-005709 A1 (QUALCOMM INCORPORATED) 06 January 2022 (2022-01-06)<br>See paragraphs [0067]-[0095]; and figures 8-18. | 1-8 |
| A | US 2021-0385686 A1 (MAVENIR SYSTEMS, INC.) 09 December 2021 (2021-12-09)<br>See paragraphs [0059]-[0344]; and figures 1-14. | 1-8 |

☐ Further documents are listed in the continuation of Box C.  ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **29 November 2023** | **29 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/012931**

| Patent document cited in search report | | | Publication date (day/month/year) | Patent family member(s) | | | Publication date (day/month/year) |
|---|---|---|---|---|---|---|---|
| WO | 2022-060180 | A1 | 24 March 2022 | AU | 2021-343338 | A1 | 04 May 2023 |
| | | | | CN | 116158166 | A | 23 May 2023 |
| | | | | EP | 4203588 | A1 | 28 June 2023 |
| | | | | JP | 2023-542177 | A | 05 October 2023 |
| | | | | KR | 10-2022-0037305 | A | 24 March 2022 |
| | | | | US | 2023-0224118 | A1 | 13 July 2023 |
| EP | 4007350 | A1 | 01 June 2022 | CN | 115280736 | A | 01 November 2022 |
| | | | | JP | 7287569 | B2 | 06 June 2023 |
| | | | | US | 2022-0417097 | A1 | 29 December 2022 |
| | | | | WO | 2021-181910 | A1 | 16 September 2021 |
| US | 2022-0182172 | A1 | 09 June 2022 | US | 11424851 | B2 | 23 August 2022 |
| WO | 2022-005709 | A1 | 06 January 2022 | CN | 115735379 | A | 03 March 2023 |
| | | | | EP | 4173359 | A1 | 03 May 2023 |
| | | | | KR | 10-2023-0029664 | A | 03 March 2023 |
| | | | | US | 2023-0180055 | A1 | 08 June 2023 |
| US | 2021-0385686 | A1 | 09 December 2021 | EP | 3920468 | A1 | 08 December 2021 |

Form PCT/ISA/210 (patent family annex) (July 2022)